(19) **Europäisches Patentamt**
**European Patent Office**
**Office européen des brevets**

(11) **EP 4 510 751 B1**

(12) **EUROPEAN PATENT SPECIFICATION**

(45) Date of publication and mention
of the grant of the patent:
**15.04.2026 Bulletin 2026/16**

(21) Application number: **24194891.8**

(22) Date of filing: **16.08.2024**

(51) International Patent Classification (IPC):
***H04W 72/566*** (2023.01)

(52) Cooperative Patent Classification (CPC):
**H04W 72/569**

(54) **OPTIMIZED RADIO RESOURCE MANAGEMENT FOR 5G NETWORK SLICING**

OPTIMIERTE FUNKRESSOURCENVERWALTUNG FÜR 5G-NETZWERK-SLICING

GESTION OPTIMISÉE DE RESSOURCES RADIO POUR DÉCOUPAGE EN TRANCHES DE RÉSEAU 5G

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.08.2023 IN 202321055298**
**13.08.2024 US 202418802205**

(43) Date of publication of application:
**19.02.2025 Bulletin 2025/08**

(73) Proprietor: **Mavenir Systems, Inc.**
**Richardson, TX 75081 (US)**

(72) Inventors:
• **SEN, Moushumi**
**560042 Bangalore (IN)**
• **KAIMALETTU, Sunil**
**Bengaluru (IN)**

• **TANEJA, Mukesh**
**560037 Bangalore (IN)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(56) References cited:
• **"3rd Generation Partnership Project; Technical Specification Group Services and System Aspects; Management and orchestration; 5G Network Resource Model (NRM); Stage 2 and stage 3 (Release 18 )"**, 26 June 2023 (2023-06-26), XP052511804, Retrieved from the Internet <URL:https://ftp.3gpp.org/tsg_sa/WG5_TM/ TSGS5_149/SA_100/28541-i40.zip 28541-i40_c04_c07.docx> [retrieved on 20230626]

**Description**

BACKGROUND OF THE INVENTION

1. Field of the Invention

The present disclosure is related to 5G wireless networks, and relates more particularly to optimizing radio resource management for 5G network slicing.

2. Description of Related Art

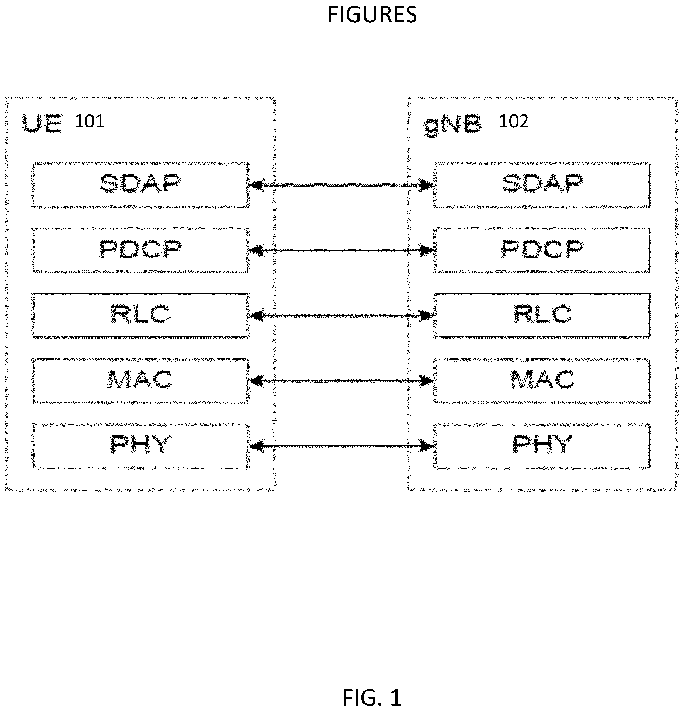

In the following sections, overview of Next Generation Radio Access Network (NG-RAN) architecture and 5G New Radio (NR) stacks will be discussed. 5G NR (New Radio) user and control plane functions with monolithic gNB (gNodeB) are shown in FIGS. 1, 2 and 3. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers originate in the UE 101 and are terminated in the gNB 102 on the network side.

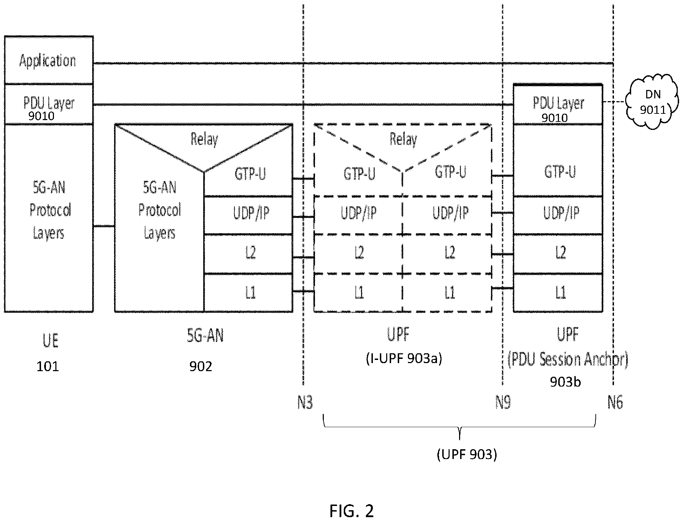

In addition, as shown in FIG. 2 (which is accordance with 3GPP TS 23.501), which is a block diagram illustrating the user plane protocol stacks for a PDU session of 5G NR, the Protocol Data Unit (PDU) layer 9010 corresponds to the PDU carried between the user equipment (UE) 101 and the data network (DN) 9011 over the PDU session. As shown in FIG. 2, UE 101 is connected to the 5G access network (AN) 902, which AN 902 is in turn connected via the N3 interface to the Intermediate UPF (I-UPF) 903a portion of the UPF 903, which I-UPF 903a is in turn connected via the N9 interface to the PDU session anchor 903b portion of the UPF 903, and which PDU session anchor 903b is connected to the DN 9011. The PDU session can correspond to Internet Protocol version 4 (IPv4), IPv6, or both types of IP packets (IPv4v6). General Packet Radio Services (GPRS) Tunneling Protocol - User Plane (GTP-U) shown in FIG. 2 supports tunnelling user plane data over N3 and N9 interfaces and provides encapsulation of end user PDUs for N3 and N9 interfaces.

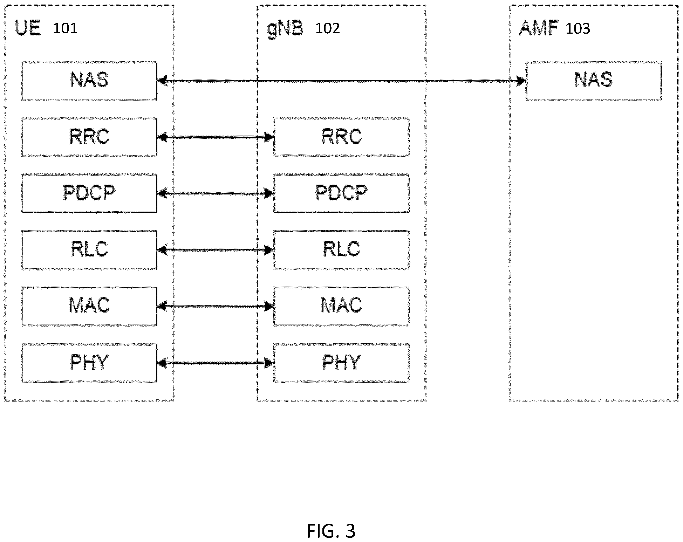

For the control plane (shown in FIG. 3, which is in accordance with 3GPP TS 38.300), RRC (Radio Resource Control), PDCP, RLC, MAC and PHY sublayers originate in the UE 101 and are terminated in the gNB 102 on the network side, and NAS (Non-Access Stratum) originate in the UE 101 and is terminated in the AMF (Access Mobility Function) 103 on the network side.

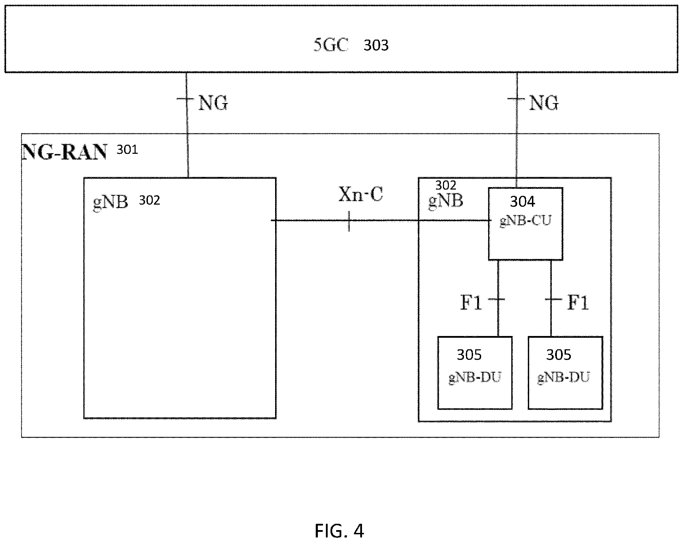

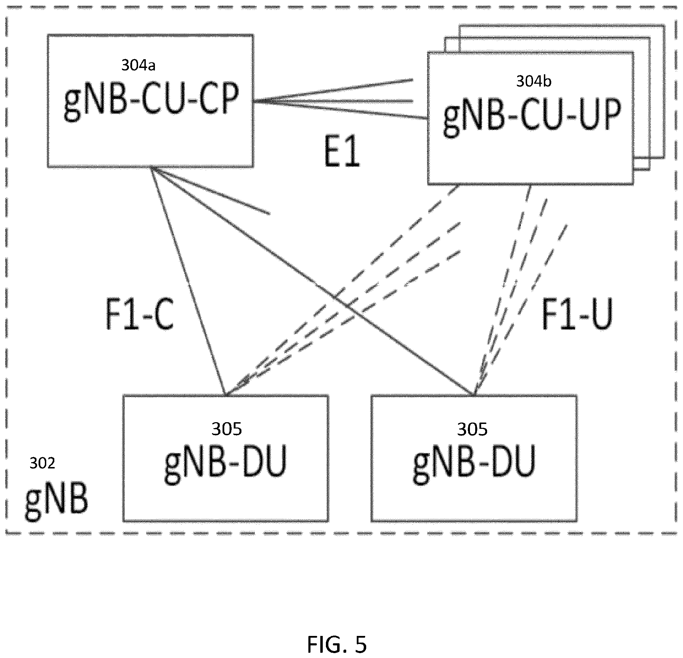

NG-Radio Access Network (NG-RAN) architecture from 3GPP TS 38.401 is shown in FIGS. 4-5. As shown in FIG. 4, the NG-RAN consists of a set of gNBs connected to the 5GC through the NG interface. As shown in FIG. 4, the NG-RAN 301 consists of a set of gNBs 302 connected to the 5GC 303 through the NG interface. Each gNB comprises gNB-CU 304 and one or more gNB-DU 305 (see FIG. 4). As shown in FIG. 5 (which illustrates separation of CU-CP (CU-Control Plane) and CU-UP (CU-User Plane)), E1 is the interface between gNB-CU-CP (CU-Control Plane) 304a and gNB-CU-UP (CU-User Plane) 304b, F1-C is the interface between gNB-CU-CP 304a and gNB-DU 305, and F1-U is the interface between gNB-CU-UP 304b and gNB-DU 305. As shown in FIG. 5, gNB 302 can consist of a gNB-CU-CP 304a, multiple gNB-CU-UPs (or gNB-CU-UP instances) 304b and multiple gNB-DUs (or gNB-DU instances) 305. One gNB-DU 305 is connected to only one gNB-CU-CP 304a, and one gNB-CU-UP 304b is connected to only one gNB-CU-CP 304a.

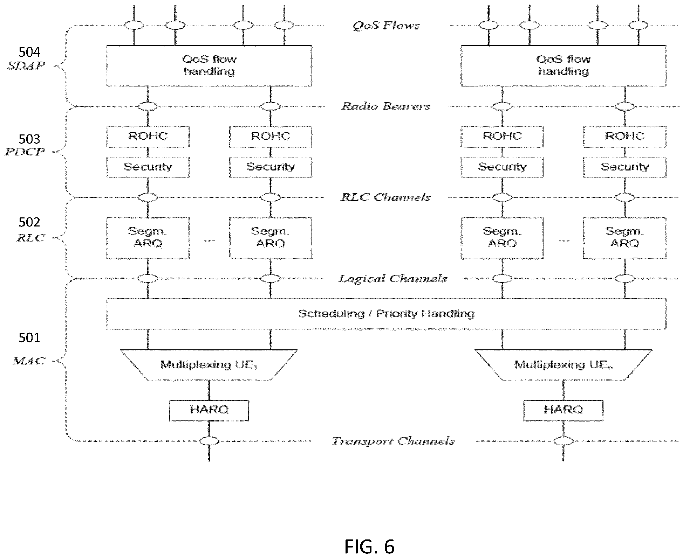

In this section, an overview Layer 2 (L2) of 5G NR will be provided in connection with FIGS. 6-8. L2 of 5G NR is split into the following sublayers (in accordance with 3GPP TS 38.300):

1) Medium Access Control (MAC) 501 in FIGS. 6-8: Logical Channels (LCs) are SAPs (Service Access Points) between the MAC and RLC layers. This layer runs a MAC scheduler to schedule radio resources across different LCs (and their associated radio bearers). For the downlink direction, the MAC layer processes and sends RLC PDUs received on LCs to the Physical layer as Transport Blocks (TBs). For the uplink direction, it receives transport blocks (TBs) from the physical layer, processes these and sends to the RLC layer using the LCs.

2) Radio Link Control (RLC) 502 in FIGS. 6-8: The RLC sublayer presents RLC channels to the Packet Data Convergence Protocol (PDCP) sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

3) Packet Data Convergence Protocol (PDCP) 503 in FIGS. 6-8: The PDCP sublayer presents Radio Bearers (RBs) to the SDAP sublayer. There are two types of Radio Bearers: Data Radio Bearers (DRBs) for data and Signaling Radio Bearers (SRBs) for control plane.

4) Service Data Adaptation Protocol (SDAP) 504 in FIGS. 6-8: The SDAP offers QoS Flows to the 5GC (5G Core). This sublayer provides mapping between a QoS flow and a DRB. It is used for QoS Flow to DRB mapping.

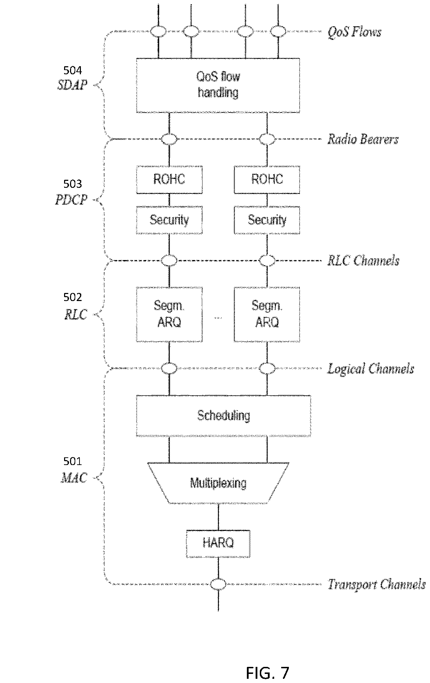

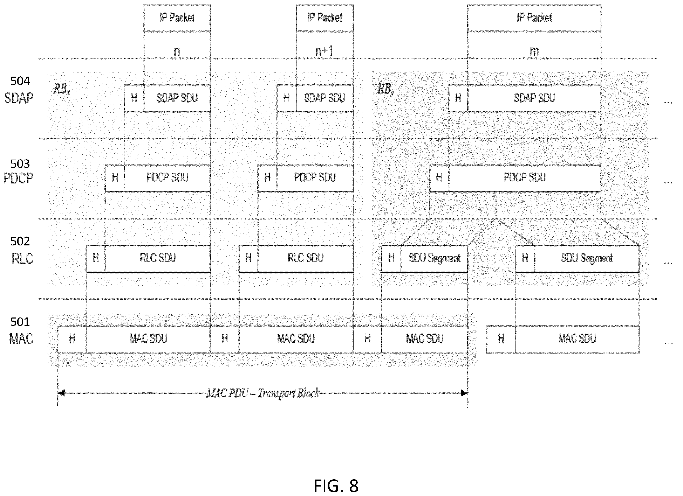

FIG. 6 is a block diagram illustrating DL L2 structure (including a scheduler or priority handling module which handles multiple UEs in a cell), in accordance with 3GPP TS 38.300. FIG. 7 is a block diagram illustrating L2 structure for a single UE, in accordance with 3GPP TS 38.300. FIG. 8 is a block diagram illustrating L2 data flow example, in accordance with 3GPP TS 38.300 (in FIG. 8, H denotes headers or sub-headers).

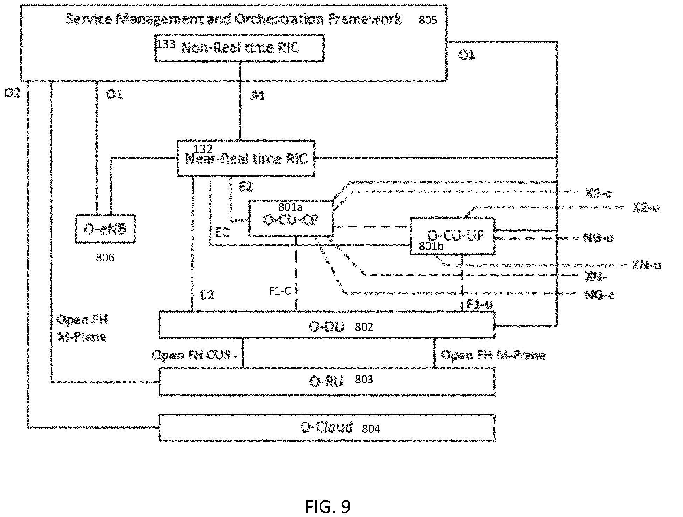

Open Radio Access Network (O-RAN) is based on disaggregated components which are connected through open and standardized interfaces based on 3GPP NG-RAN. An overview of O-RAN with disaggregated RAN CU (Centralized Unit), DU (Distributed Unit), and RU (Radio Unit), near-real-time Radio Intelligent Controller (Near-RT-RIC) and non-real-time RIC is illustrated in FIG. 9.

As shown in FIG. 9, the CU (shown split as O-CU-CP 801a and O-CU-UP 801b) and the DU (shown as O-DU 802) are connected using the F1 interface (with F1-C for control plane and F1-U for user plane traffic) over a mid-haul (MH) path. One DU can host multiple cells (e.g., one DU could host 24 cells) and each cell may support many users. For example, one cell may support 800 Radio Resource Control (RRC)-connected users and out of these 800, there may be 250 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) could support multiple DUs and thus multiple cells. For example, a CU-CP could support 1,000 cells and around 100,000 User Equipments (UEs). Each UE could support multiple Data Radio Bearers (DRBs) and there could be multiple instances of CU-UP (CU-User Plane) to serve these DRBs. For example, each UE could support 4 DRBs, and 400,000 DRBs (corresponding to 100,000 UEs) may be served by five CU-UP instances (and one CU-CP instance).

The DU could be located in a private data center, or it could be located at a cell-site. The CU could also be in a private data center or even hosted on a public cloud system. The DU and CU, which are typically located at different physical locations, could be tens of kilometers apart. The CU communicates with a 5G core system, which could also be hosted in the same public cloud system (or could be hosted by a different cloud provider). A RU (Radio Unit) (shown as O-RU 803 in FIG. 9) is located at a cell-site and communicates with the DU via a front-haul (FH) interface.

The E2 nodes (CU and DU) are connected to the near-real-time RIC 132 using the E2 interface. The E2 interface is used to send data (e.g., user and/or cell KPMs) from the RAN, and deploy control actions and policies to the RAN at near-real-time RIC 132. The applications or services at the near-real-time RIC 132 that deploys the control actions and policies to the RAN are called xApps. During the E2 setup procedures, the E2 node advertises the metrics it can expose, and an xApp in the near-RT RIC can send a subscription message specifying key performance metrics which are of interest. The near-real-time RIC 132 is connected to the non-real-time RIC 133 (which is shown as part of Service Management and Orchestration (SMO) Framework 805 in FIG. 9) using the A1 interface. The applications that are hosted at non-RT-RIC are called rApps. Also shown in FIG. 9 are O-eNB 806 (which is shown as being connected to the near-real-time RIC 132 and the SMO Framework 805) and O-Cloud 804 (which is shown as being connected to the SMO Framework 805).

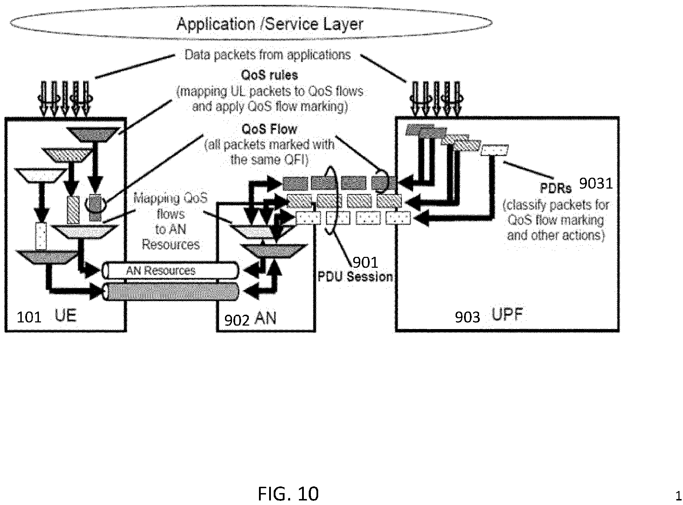

In this section, PDU sessions, DRBs, and quality of service (QoS) flows will be discussed. In 5G networks, PDU connectivity service is a service that provides exchange of PDUs between a UE and a data network identified by a Data Network Name (DNN). The PDU Connecitivity service is supported via PDU sessions that are established upon request from the UE. The DNN defines the interface to a specific external data network. One or more QoS flows can be supported in a PDU session. All the packets belonging to a specific QoS flow have the same 5QI (5G QoS Identifier). A PDU session consists of the following: Data Radio Bearer which is between UE and CU in RAN; and an NG-U GTP tunnel which is between CU-UP and UPF (User Plane Function) in the core network. FIG. 10 illustrates an example PDU session (in accordance with 3GPP TS 23.501) consisting of multiple DRBs, where each DRB can consist of multiple QoS flows. In FIG. 10, three components are shown for the PDU session 901: UE 101; access network (AN) 902; and UPF 903, which includes Packet Detection Rules (PDRs) 9031.

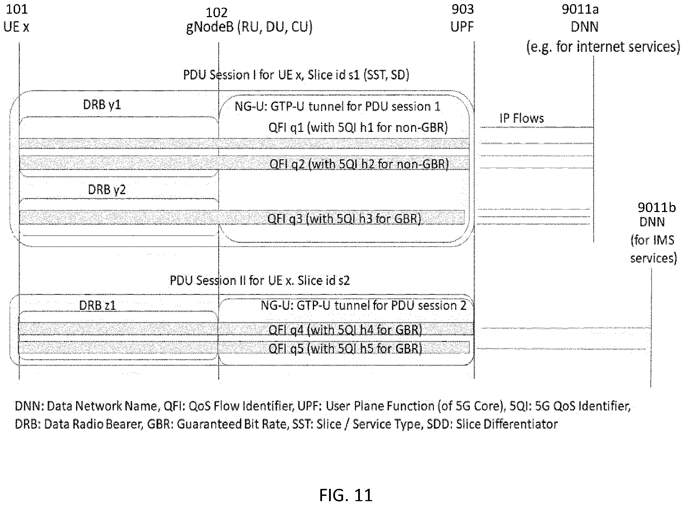

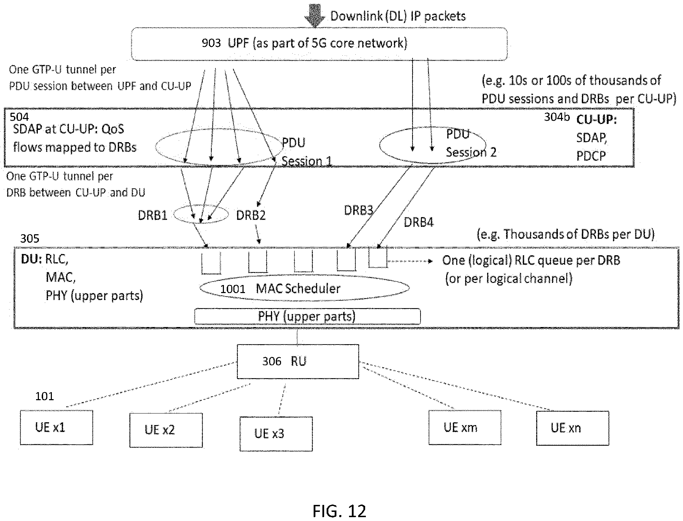

The following should be noted for 3GPP 5G network architecture, which is illustrated in FIG. 11 (in the context of multiple PDU sessions involving multiple DRBs and QoS Flow Identifiers (QFIs), which PDU sessions are implemented involving UE 101, gNodeB 102, UPF 903, and DNNs 9011a and 9011b) and FIG. 12 (in the context of Radio Resource Management (RRM) (for connecting UE 101 to the network via RU 306) with a MAC Scheduler 1001):

1) The transport connection between the base station (i.e., CU-UP 304b) and the UPF 903 uses a single GTP-U tunnel per PDU session, as shown in FIG. 11. The PDU session is identified using GTP-U TEID (Tunnel Endpoint Identifier).

2) The transport connection between the DU 305 and the CU-UP 304b uses a single GTP-U tunnel per DRB (see, e.g., FIGS. 11 and 12).

3) SDAP:

a) The SDAP (Service Adaptation Protocol) 504 Layer receives downlink data from the UPF 903 across the NG-U interface.

b) The SDAP 504 maps one or more QoS Flow(s) onto a specific DRB.

c) The SDAP header is present between the UE 101 and the CU (when reflective QoS is enabled), and includes a field to identify the QoS flow within a specific PDU session.

4) GTP-U protocol includes a field to identify the QoS flow and is present between CU-UP and UPF 903 (in the core network).

5) One (logical) RLC queue is implemented per DRB (or per logical channel), as shown in FIG. 12.

FIG. 11 illustrates multiple PDU sessions involving multiple DRBs and QoS Flow Identifiers (QFIs).

In this section, standardized 5QI to QoS characteristics mapping will be discussed. As per 3GPP TS 23.501, the one-to-one mapping of standardized 5QI values to 5G QoS characteristics is specified in Table 1 shown below. The first column represents the 5QI value. The second column lists the different resource types, i.e., as one of Non-GBR, GBR, Delay-critical GBR. The third column ("Default Priority Level") represents the priority level PrioritySQI, for which the lower the value the higher the priority of the corresponding QoS flow. The fourth column represents the Packet Delay Budget (PDB), which defines an upper bound for the time that a packet may be delayed between the UE and the N6 termination point at the UPF. The fifth column represents the Packet Error Rate (PER). The sixth column represents the maximimum data burst volume for delay-critical GBR types. The seventh column represents averaging window for GBR, delay critical GBR types. Note that only a subset of 5QI values defined in 3GPP TS 23.501 are shown in Table 1 below.

For example, as shown in Table 1, 5QI value 1 represents GBR resource type with the default priority value of 20, PDB of 100 ms, PER of 0.01, and averaging window of 2000ms. Conversational voice falls under this catogery. Similarly, as shown in Table 1, 5QI value 7 represents non-GBR resource type with the default priority value of 70, PDB of 100ms and PER of 0.001. Voice, video (live streaming), and interactive gaming fall under this catogery.

Table 1

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 131 | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26.238 [76]) |
| 72 | | 56 | 300 ms (NOTE 11, NOTE 13, NOTE 15) | $10^{-4}$ | N/A | 2000 ms | "Live" Uplink Streaming (e.g. TS 26.238 [76]) |
| 73 | | 56 | 300 ms (NOTE 11, NOTE 13, NOTE 15) | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26.238 [76]) |
| 76 | | 56 | 500 ms (NOTE 11, NOTE 13, NOTE 15) | $10^{-4}$ | N/A | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) Interactive Gaming |

In this section, Radio Resource Management (RRM), e.g., per-DRB RRM, will be discussed. FIG. 12 is a block diagram illustrating RRM with a MAC Scheduler. L2 methods (such as MAC scheduler) play a critical role in allocating radio resources to different UEs in a cellular network. The scheduling priority of a logical channel ($P_{LC}$) is determined as part of MAC scheduler using one of the following:

$$P_{LC} = W_{5QI}*P_{5QI} + W_{GBR}*P_{GBR} + W_{PDB}*P_{PDB} + W_{PF}*P_{PF},$$

or

$$P_{LC} = (W_{5QI}*P_{5QI} + W_{PF}*P_{PF}) * \text{maximum} (W_{GBR}*P_{GBR}, W_{PDB}*P_{PDB})$$

Once one of the above methods is used to compute scheduling priority of a logical channel corresponding to a UE in a cell, the same method is used for all other UEs.

In the above expressions, the parameters are defined as follows:

a) $P_{5QI}$ is the priority metric corresponding to the QoS class (5QI) of the logical channel. Incoming traffic from a DRB is mapped to Logical Channel (LC) at RLC level. $P_{5QI}$ is the default 5QI priority value, Priority$_{5QI}$, of a QoS flow that is mapped to the current LC. The lower the value of Priority$_{5QI}$ the higher the priority of the corresponding QoS flow. For example, Voice over New Radio (VoNR) (with 5QI of 1) will have a much higher $P_{5QI}$ compared to web browsing (with 5QI of 9).

b) $P_{GBR}$ is the priority metric corresponding to the target bit rate of the corresponding logical channel. The GBR metric $P_{GBR}$ represents the fraction of data that must be delivered to the UE within the time left in the current averaging window $T_{avg\_win}$ (as per 5QI table, default is 2000 msec.) to meet the UE's GBR requirement. $P_{GBR}$ is calculated as follows:

$$P_{GBR} = remData/targetData$$

where

$targetData$ is the total data bits to be served in each averaging window $T_{avg\_win}$ in order to meet the GFBR of the given QoS flow;
$remData$ is the amount of data bits remaining to be served within the time left in the current averaging window;
Priority$_{GBR}$ is reset to 1 at the start of each averaging window $T_{avg\_win}$, and should go down to 0 towards the end of this window if the GBR criterion is met; and

$$\text{Priority}_{\text{GBR}} = 0 \text{ for non-GBR flows.}$$

c) $P_{PDB}$ is the priority metric corresponding to the packet delay budget at DU for the corresponding logical channel. $P_{PDB} = 1$ if $PDB^{DU} <= QDelay_{RLC}$ and $P_{PDB} = 1 / (PDB^{DU} - QDelay_{RLC})$ if $PDB^{DU} > QDelay_{RLC}$ where both $PDB^{DU}$ (Packet Delay Budget at DU) and RLC Queuing delay, $QDelay_{RLC}$, are measured in terms of slots. $QDelay_{RLC} = (t -T_{RLC})$ is the delay of the oldest RLC packet in the QoS flow that has not been scheduled yet, and it is calculated as the difference in time between the SDU insertion in RLC queue to current time where $t :=$ current time instant, $T_{RLC} :=$ time instant when oldest SDU was inserted in RLC.

d) $P_{PF}$ is the priority metric corresponding to proportional fair metric of the UE. $P_{PF}$ is the classical PF Metric, calculated on a per UE basis as $P_{PF} = r / R_{avg}$
where
r: UE spectral efficiency calculated based on one RB & it's last reported CQI; and

$$R_{avg} = a.R_{avg} + (1\text{-}a).b \,,$$

UE's average throughput, where b>=0 is #bits scheduled in current TTI and 0 < a <= 1 is the IIR filter coefficient

e) In addition, the following weights are defined: $W_{5QI}$ is the weight of $P_{5QI}$; f) $W_{GBR}$ is the weight of $P_{GBR}$; g) $W_{PDB}$ is the weight of $P_{PDB}$; and h) $W_{PF}$ is the weight of $P_{PF}$. Each of the above weights is set to a value between 0 and 1.

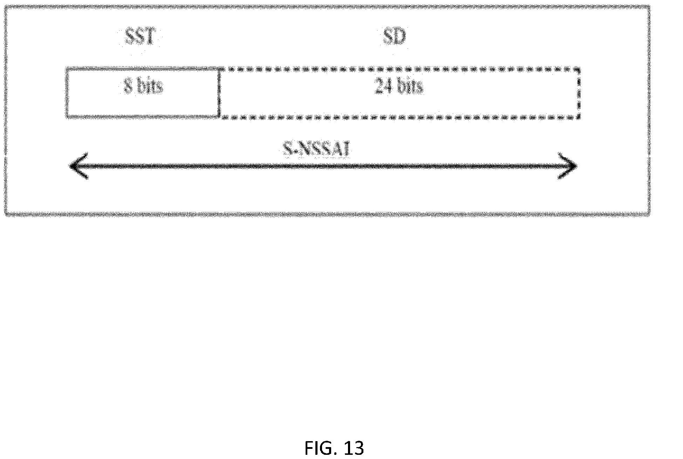

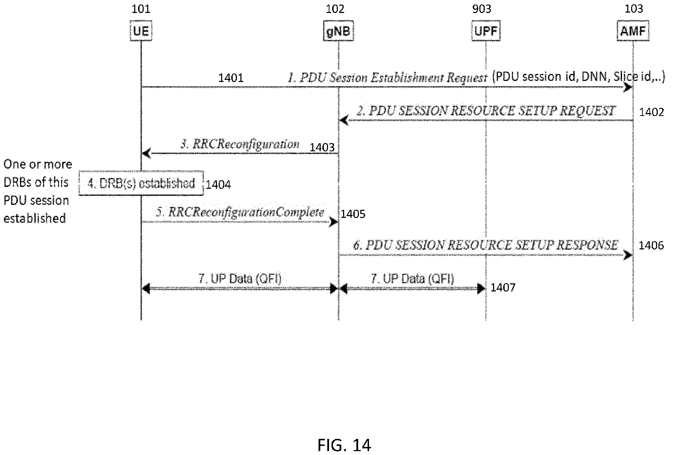

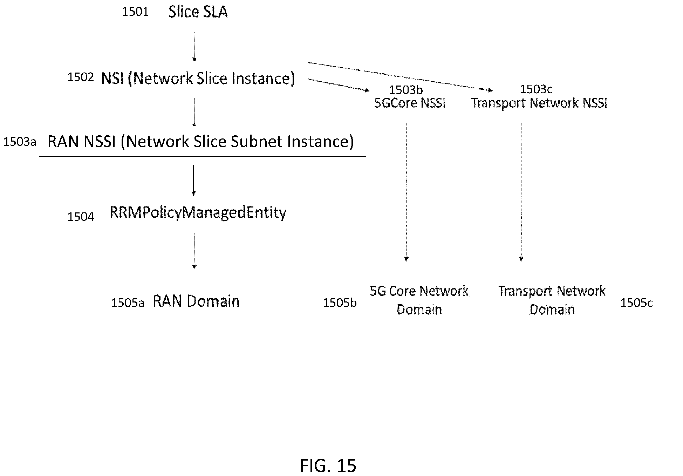

A network slice is a logical network that provides specific network capabilities and network characteristics, supporting various service properties for network slice customers (e.g., as specified in 3GPP TS 28.500). A network slice divides a physical network infrastructure into multiple virtual networks, each with its own (dedicated or shared) resources and service level agreements. An S-NSSAI (Single Network Slice Selection Assistance Information) identifies a network slice in 5G systems. As per 3GPP TS 23.501, S-NSSAI is comprised of: i) a Slice/Service type (SST), which refers to the expected Network Slice behavior in terms of features and services; and ii) a Slice Differentiator (SD), which is optional information that complements the Slice/Service type(s) to differentiate amongst multiple Network Slices of the same Slice/Service type.
The structure of S-NSSAI is shown in FIG. 13. SST has an 8-bit field, and it may have standardized and/or non-standardized values between 0 and 255. The range of 0 to 127 corresponds to standardized SST range, and the range of 128 to 255 corresponds to operator specific range. 3GPP has standardized some SSTs, e.g., SSTs for eMBB (enhanced mobile broadband), URLLC (ultra-reliable low latency communication) and MIoT (Massive Internet of Things (IoT)) slices.
UE first registers with a 5G cellular network identified by its PLMN ID (Public Land Mobile Network Identifier). UE knows which S-NSSAIs are allowed in a given registration area. It then establishes a PDU session associated with a given S-NSSAI in that network towards a target Data Network (DN), such as the internet. As in FIG. 11, one or more QoS flows could be activated within this PDU session. UE can perform data transfer using a network slice for a given data network using that PDU session. A high-level view of UE establishing a PDU session with a specific DNN is shown in FIG. 14.
As shown in FIG. 14, as step 1 of establishing a PDU session, UE 101 sends a PDU Session Establishment Request (as referenced by process arrow 1401) to Access Mobility Function (AMF) 103, which PDU Session Establishment Request can include, e.g., PDU session ID, Data Network Name (DNN) and Slice ID. As step 2, the AMF 103 sends a PDU Session Resource Setup Request (as referenced by process arrow 1402) to gNB 102. As step 3, the gNB 102 sends a RRC Reconfiguration message (as referenced by process arrow 1403) to UE 101. As step 4, DRB(s) of the PDU session are established (as referenced by 1404). As step 5, UE 101 sends a RRC Reconfiguration Complete message (as referenced by process arrow 1405) to gNB 102. As step 6, gNB 102 sends a PDU Session Resource Setup Response (as referenced by process arrow 1406) to AMF 103. Subsequently, in step 7, UP data (e.g., including QFI) are exchanged among UE 101, gNB 102 and UPF 903 (as referenced by 1407).
As described in 3GPP TS 23.501, an NSSAI is a collection of S-NSSAIs. An NSSAI may be a Configured NSSAI, a Requested NSSAI or an Allowed NSSAI. There can be at most eight S-NSSAIs in Allowed and Requested NSSAIs sent in signaling messages between the UE and the Network. The Requested NSSAI signaled by the UE to the network allows the network to select the Serving AMF, Network Slice(s) and Network Slice Instance(s) for this UE. Network Slice Instance (NSI) consists of set of network function instances and the required resources that are deployed to serve the traffic associated with one or more S-NSSAIs.
3GPP TS 28.541 includes information model definitions, referred to as Network Resource Model (NRM), for the characterization of network slices. Management representation of a network slice is realized with Information Object Classes (IOCs), named NetworkSlice and NetworkSliceSubnet, as specified in 5G Network Resource Model (NRM), 3GPP TS 28.541. The NetworkSlice IOC and the NetworkSliceSubnet IOC represent the properties of a Network Slice Instance (NSI) and a Network Slice Subnet Instance (NSSI), respectively. As shown in FIG. 15, which illustrates a high-level, hierarchical view of network slice management, the slice management is subject to slice service level agreement (SLA) 1501. As shown in FIG. 15, each NSI 1502 can be composed of a single NSSI (e.g., RAN NSSI 1503a) or multiple NSSIs (e.g., RAN NSSI 1503a, 5G Core NSSI 1503b and Transport Network NSSI 1503c). In the hierarchical view of network slice management shown in FIG. 15, i) RRM policy managed entity 1504 is subject to RAN NSSI 1503a, and RAN domain 1505a is subject to RRM policy managed entity 1504; ii) 5G Core Network domain 1505b is subject to 5G Core NSSI 1503b; and iii) Transport Network domain 1505c is subject to Transport Network NSSI 1503c.

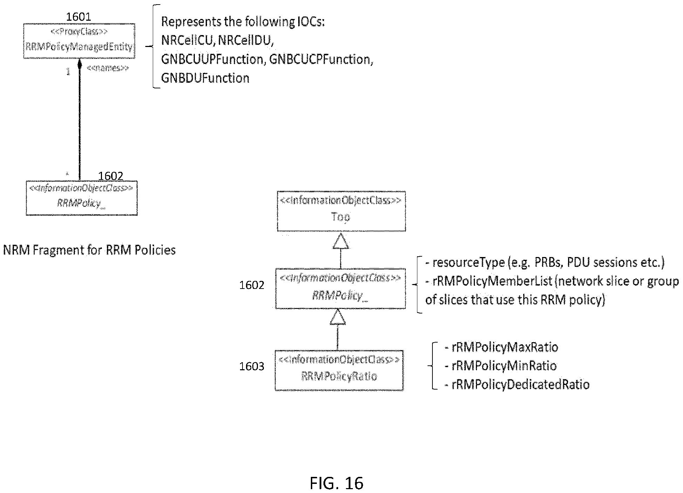

Service profile consists of attributes defined to encode the network-slice-related requirements supported by the NSI. Examples of some attributes in the service profile include: aggregate downlink throughput of a given network slice, per-UE average throughput in the given network slice, and UE density in a given coverage area. FIG. 16 provides a simplified view of the classes and attributes of 5G Network Resource Model (NRM) for resource allocation to slices, which classes and attributes are explained below (the left side of FIG. 16 illustrates an NRM fragment for RRM policies; and the right side of FIG. 16 illustrates different IOCs).

1) The RRMPolicyManagedEntity proxy class 1601 represents the following IOCs on which RRM policies can be applied: NR Cell resources managed at CU (NRCellCU), NR cell resources managed at DU (NRCellDU), CU-UP function (GNBCUUPFunction), CU-CP function (GNBCUCPFunction), and DU function (GNBDUFunction).

2) The RRMPolicy _IOC 1602 defines two attributes:

a) resourceType attribute (e.g., PRBs, Number of PDU sessions, Number of RRC connected users, number of UEs, number of DRBs, etc.).

i) The following are standardized:

PRB: Ratio of total PRBs available for allocation (in DU).

RRC Connected Users: Ratio of total number of users within the cell (in CU-CP).

DRB: Ratio of total number of DRBs (in CU-UP).

ii) Other vendor-defined resources can be used (e.g., number of DRBs, number of UEs, etc.).

b) rRMPolicyMemberList attribute: Associated network slice or group of slices for which this policy is defined.

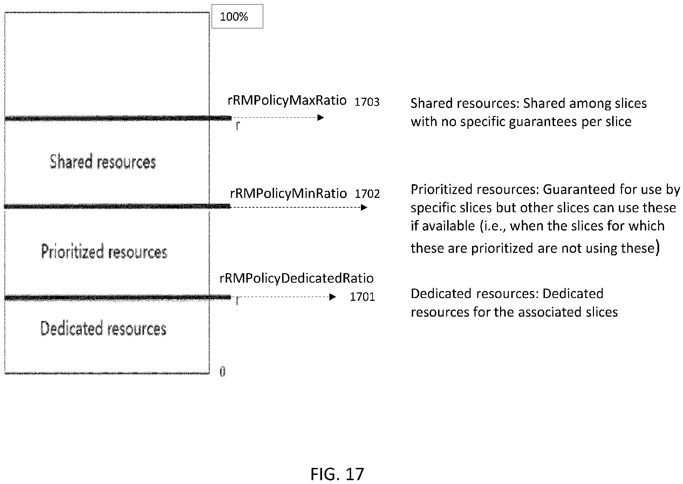

3) The RRMPolicyRatio IOC 1603 provides a resource model for distribution of resources among slices. Three resource categories (see, e.g., FIGS. 16 and 17) have been defined in 3GPP TS 28.541 in connection with RRMPolicyRatio: Category I (*rRMPolicyDedicatedRatio*); Category II (*rRMPolicyMinRatio*); and Category III (*rRMPolicyMaxRatio*). FIG. 17 shows the structure of RRMPolicyRatio IOC, including the three resource categories I, II and III, which will be described in detail below.

Category I: The attribute *rRMPolicyDedicatedRatio* 1701 shown in FIG. 17 defines the dedicated resource usage quota for the *rRMPolicyMemberList,* including dedicated resources. The sum of the *rRMPolicyDedicatedRatio* 1701 values assigned to all RRMPolicyRatio(s) name-contained by the same Managed Entity shall be less or equal to 100. Dedicated resources refer to the resources which are dedicated for use by the associated *rRMPolicyMemberList.* These resources cannot be shared even if the associated *rRMPolicyMember* does not use them. The Dedicated resources quota is represented by *rRMPolicyDedicatedRatio* 1701.

Category II: The attribute *rRMPolicyMinRatio* 1702 shown in FIG. 17 defines the minimum resource usage quota for the associated *rRMPolicyMemberList,* including at least one of prioritized resources and dedicated resources, i.e., *rRMPolicyMinRatio* 1702 defines the resources quota that needs to be guaranteed for use by the associated *rRMPolicyMemberList.* For the same resource type, the sum of the *rRMPolicyMinRatio* 1702 values assigned to all RRMPolicyRatio(s) name-contained by same Managed Entity shall be less or equal 100. Prioritized resources refer to the resources which are preferentially used by the associated *rRMPolicyMemberList.* These resources are guaranteed for use by the associated *rRMPolicyMemberList* when it needs to use them. When not used, these resources may be used by other rRMPolicyMemberList(s) (i.e., the rRMPolicyMemberList(s) defined in RRMPolicyRatio(s) name-contained by the same Managed Entity). The prioritized resources quota is represented by [*rRMPolicyMinRatio* minus *rRMPolicyDedi-*

**EP 4 510 751 B1**

*catedRatio*].

Category III: The attribute *rRMPolicyMaxRatio* 1703 shown in FIG. 17 defines the maximum resource usage quota for the associated *rRMPolicyMemberList,* including at least one of shared resources, prioritized resources and dedicated resources. For the same resource type, the sum of the *rRMPolicyMaxRatio* values assigned to all RRMPolicyRatio(s) name-contained by the same Managed Entity can be greater than 100. Shared resources refer to the resources that are shared with other rRMPolicyMemberList(s) (i.e., the *rRMPolicyMemberList(s)* defined in RRMPolicyRatio(s) name-contained by the same Managed Entity). The shared resources are not guaranteed for use by the associated *rRMPolicyMemberList.* The shared resources quota is represented by *[rRMPolicyMaxRatio* minus *rRMPolicyMinRatio*].

An example scenario involving the following two slices in a cell is provided:

RRM Policy Instance 1:

- S-NSSAI = x1 (for slice 1),
- rRMPolicyDedicatedRatio: 5%
- rRMPolicyMinRatio: 15%
- rRMPolicyMaxRatio: 75%

RRM Policy Instance 2:

- S-NSSAI = x2 (for slice 2)
- rRMPolicyDedicatedRatio: 8%
- rRMPolicyMinRatio: 20%
- rRMPolicyMaxRatio: 85%

For the slice with S-NSSAI x1, dedicated pool of RBs is 5%, and prioritized pool of RBs is 10%. For the slice with S-NSSAI x2, dedicated pool of RBs is 8%, and prioritized pool of RBs is 12% in the example above.

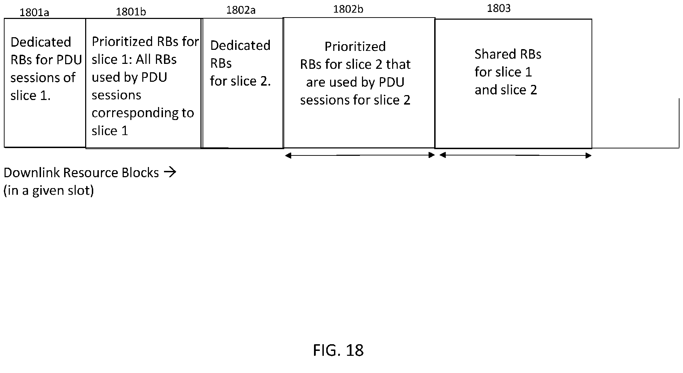

FIG. 18 illustrates another example of resource allocation for DL resource blocks, involving two slices in a cell. In the example illustrated in FIG. 18, each slice uses all of the respective dedicated RBs (e.g., 1801a for slice 1, and 1802a for slice 2), and each slice uses its share of prioritized RBs (e.g., 1801b for slice 1, and 1802b for slice 2). However, in a hypothetical scenario, if a particular slice x doesn't use all of its prioritized RBs (e.g., in the case of insufficient pending data in the PDU session corresponding to the particular slice x), the remaining RBs could be used by the other slice(s). In FIG. 18, only a portion of the prioritized RBs for slice 2 is actually used by PDU sessions for slice 2 (as referenced by 1802b), and the remaining prioritized RBs for slice 2 are shared with slice 1 (as referenced by 1803). In addition, although the example of FIG. 18 shows RBs allocated in contiguous manner, this is merely an example, and allocation of RBs need not be contiguous.

A per-logical channel (or per-DRB) radio resource management (RRM) method was previously described above, e.g., in connection with FIG. 12. In addition, constraints due to slicing radio resource parameters (such as dedicated, prioritized or shared resources) were previously explained above. Each DRB has its own QoS requirements (such as based on its 5QI), while each slice (which consists of PDU sessions and thus DRBs from several UEs in a cell) has its own SLA (e.g., aggregate throughput, etc.). Per-DRB RRM methods (such as the method previously described above) do not consider slice-related constraints and SLAs.

Therefore, there is a need for optimized radio resource allocation methods for 5G-slicing environment.

SUMMARY

Accordingly, what is desired is a system and method for optimizing radio resource allocation for 5G-slicing environment.

According to an example embodiment, in a method for optimizing radio resource allocation for 5G-slicing environment, each of the Downlink (DL) and Uplink (UL) Schedulers shall allocate resources to each PDU session according to the following rules for each RRM Policy Ratio Instance n, n=1,2, ... , N:

Dedicated resource allocation: An aggregate of $X\_n$ % of total available resources *Avail_RBTOT* shall be allocated to all PDU sessions belonging to slices in a member List *L_n.* If there are resources leftover within this category (e.g., for lack of traffic), these leftover resources shall go waste. We also provide a configurable option with which an operator can count unused dedicated resources as part of shared resources and distribute to different slices.

Prioritized resource allocation: An aggregate of $(Y\_n - X\_n)$% of total available resources Avail_RBTOT shall be

9

allocated to PDU sessions belonging to slices in a member List L_n. If there are resources leftover within this category (e.g., for lack of traffic), these resources shall be made available as shared resources to policy members from all other member lists.

Shared resource allocation: Remaining resources, if any, shall be shared by all SRBs, MAC-CEs and PDU sessions (DRBs), including PDU sessions from slices that have already been allocated resources, such that the aggregate resources allocated to PDU sessions in a Member List L_n do not exceed Z_n % of total available resources Avail_RBTOT for each n = 0, 1, 2, ... , N.

Each UE may have multiple PDU session, each of which may belong to a different slice and possibly to a different RRM Policy Instance. In other words, different PDU sessions of the same UE may be assigned different resource (PRBs) quota by the RRM Policy framework. An RRM Policy Instance "n" may have more than one entry (i.e., slice S-NSSAI) in its member list L_n. Then the values of rRMPolicyDedicatedRatio X_n, rRMPolicyMinRatio Y_n and rRMPolicyMaxRatio Z_n are collectively applicable to all of these member slices together. For example, all slices in L_n shall have an aggregate of X_n % of available DU resources in the cell reserved as dedicated resources, and so on.

For this application the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

DESCRIPTION OF THE DRAWINGS

FIG. 1 is a block diagram illustrating the user plane stack of 5G NR.

FIG. 2 is a block diagram illustrating the user plane protocol stacks for a PDU session of 5G NR.

FIG. 3 is a block diagram illustrating the control plane stack of 5G NR.

FIG. 4 is a block diagram illustrating NG-RAN architecture.

FIG. 5 is a block diagram illustrating separation of CU-CP and CU-UP in NG-RAN architecture.

FIG. 6 is a block diagram illustrating DL L2 structure.

FIG. 7 is a block diagram illustrating UL L2 structure.

FIG. 8 is a block diagram illustrating L2 data flow example.

FIG. 9 illustrates an overview of O-RAN architecture.

FIG. 10 illustrates an example PDU session consisting of multiple DRBs.

FIG. 11 illustrates an example of PDU sessions consisting of multiple DRBs and QFIs.

FIG. 12 is a block diagram illustrating RRM with a MAC Scheduler.

FIG. 13 illustrates the structure of S-NSSAI.

FIG. 14 illustrates a signal flow diagram of a UE establishing a PDU session with a specific Data Network Name (DNN).

FIG. 15 illustrates a high-level view of network slice management.

FIG. 16 illustrates the classes and attributes of 5G Network Resource Model (NRM) for resource allocation to slices.

FIG. 17 illustrates the structure of RRM Policy Ratio.

FIG. 18 illustrates resource allocation for downlink (DL) resource blocks (RBs) in an example with 2 slices.

FIG. 19 is a block diagram illustrating an example method for optimizing radio resource allocation for 5G-slicing environment.

DETAILED DESCRIPTION

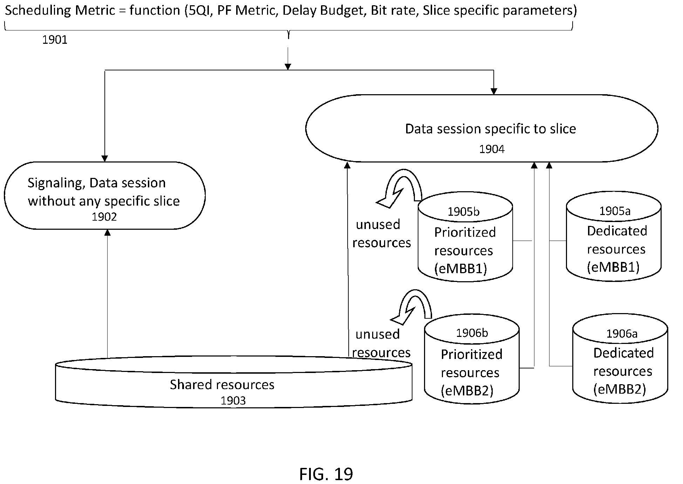

FIG. 19 is a block diagram illustrating an example method for optimizing radio resource allocation for 5G-slicing environment. As shown in FIG. 19, the scheduling metric 1901 used for allocating resources is determined as a function of 5QI, proportional-fair (PF) metric, packet delay budget, bit rate, and slice-specific parameters. For signaling and data session(s) without any specific slice (as referenced by 1902), shared resources 1903 are utilized. For data session(s) specific to a slice (as referenced by 1904), i) dedicated resources 1905a and prioritized resources 1905b are utilized, e.g., for eMBB1, and ii) dedicated resources 1906a and prioritized resources 1906b are utilized, e.g., for eMBB2. Any unused resources from prioritized resources 1905b and 1906b go into the share resources 1903 and can be shared among different slices.

According to an example embodiment, in a method for optimizing radio resource allocation methods for 5G-slicing environment, each of the Downlink (DL) and Uplink (UL) Schedulers shall allocate resources to each PDU session according to the following rules for each RRM Policy Ratio Instance n, n=1,2, ... , N:

Dedicated resource allocation: An aggregate of $X\_n$ % of total available resources $Avail\_RBTOT$ shall be allocated to all PDU sessions belonging to slices in a member List $L\_n$. If there are resources leftover within this category (e.g., for lack of traffic), these leftover resources shall go to waste.

Prioritized resource allocation: An aggregate of $(Y\_n - X\_n)$% of total available resources Avail_RBTOT shall be allocated to PDU sessions belonging to slices in a member List L_n. If there are resources leftover within this category (e.g., for lack of traffic), these resources shall be made available as shared resources to policy members from all other member lists.

Shared resource allocation: Remaining resources, if any, shall be shared by all SRBs, MAC-CEs and PDU sessions (DRBs), including PDU sessions from slices that have already been allocated resources, such that the aggregate resources allocated to PDU sessions in a Member List L_n do not exceed $Z\_n$ % of total available resources Avail_RBTOT for each n = 0, 1, 2, ... , N.

Each UE may have multiple PDU sessions, each of which may belong to a different slice and possibly to a different RRM Policy Instance. In other words, different PDU sessions of the same UE may be assigned different resource (PRBs) quotas by the RRM Policy framework. An RRM Policy Instance "n" may have more than one entry (i.e., slice S-NSSAI) in its member list L_n. Then the values of rRMPolicyDedicatedRatio X_n, rRMPolicyMinRatio Y_n, and rRMPolicyMaxRatio Z_n are collectively applicable to all of these member slices together, e.g., all slices in L_n shall have an aggregate of X_n % of available DU resources in the cell reserved as dedicated resources, and so on.

In the following sections, slice-aware downlink (DL) scheduling will be discussed. The total number of resources available for PDSCH transmission in a slot is referenced as Avail_RBTOT, and the RRM Policy ratio will be applied on these total available resources Avail_RBTOT in DL.

DL Scheduling of SRB and MAC-CE: High priority traffic, e.g., SRBs and MAC-CEs, cannot belong to any slice according to current 3GPP data model, as these types of traffic are not PDU sessions. However, if these traffic types are treated to be covered by the default RRM Policy Instance with only shared resources available, then the shared resources available will have to be proportionately divided amongst all RRM policy instances, which may result in fragmentation and delay of high priority SRB & MAC-CE transmissions, thereby leading to drop in system performance. To avoid such a scenario, we propose to define a separate SRB Policy Instance 'n', where n= $nsSrbPolicy$ with a single entry (SRB slice) in its member list $L_n$ with S-NSSAI set to $nsSrbSnssai$. $nsSrbPolicy$ and $nsSrbSnssai$ are configuration parameters that can be set by the network operator. This SRB slice shall contain all SRB and MAC-CE traffic in the cell. We propose the following setting for the RRM policy parameters: a) dedicated ratio $X_{nsSrbPolicy}$ = 0; b) min ratio $Y_{nsSrbPolicy}$ = 0; and c) max ratio $Z_{nsSrbPolicy}$ can be set to any value up to a maximum of 100%. Unlike other slices, this SRB slice shall not have a slice level SLA that is end-to-end, but rather shall be valid and applicable only within each cell in the DU. The distinct S-NSSAI for SRB traffic shall be useful for bookkeeping purposes for the network operator and can even be monetized. The SRB and MAC-CE traffic are of the highest priority and are scheduled prior to any other traffic in each slot. This includes both initial transmission and retransmission.

<u>DL Scheduling of Data Radio Bearers (DRBs):</u> The RRM Policy ratio shall be applied to total available resources AvailRB_TOT after allocating resources to high priority queues (as explained in the above section and as explained below).

<u>DL Scheduling of Retransmission TBs:</u> The retransmission TBs shall be scheduled after SRB & MAC CEs. Each retransmission TB shall only be transmitted without fragmentation. These shall be allocated resources from the corresponding slices to which the multiplexed MAC SDUs belong in proportion to their size. As an example, let's consider a retransmission TB with B information bytes (excluding padding bytes, if any) that required P PRBs for its initial transmission. For all MAC SDUs multiplexed in the retransmission TB which belong to member list $L\_k$, of policy Instance k, k=0, 1, ..., K-1, the scheduler shall allocate (b_k/B)*P PRBs from policy instance k, where b_k is the total size in bytes of all SDUs in member list $L\_k$. Note that there may be multiple SDUs belonging to one or more slices in member list $L\_k$ that are governed by this single policy instance #k. The padding bytes are ignored in this calculation. As another example policy, all resources required for transmission of each SRB, MAC CE and MAC SDUs that are multiplexed within a retransmission TB, must be available from the respective slices to which each such SRB, MAC CE & MAC SDU belongs, for the retransmission TB to be scheduled in a slot. For this, a vendor specific data model can be used and it is not necessary to use 3GPP specific data model described earlier. As retransmission TBs may be allocated RBs from different slices, it shall not be associated with any specific slice and shall remain an independent Queue.

<u>Slice- & QoS-aware Scheduling for</u> DRBs: QoS awareness of DRBs during downlink scheduling shall be achieved by supporting QoS differentiation within each slice and across slices. The DL scheduler shall derive a logical channel (LC) scheduling metric $\rho$ based on the UE's proportional fair metric and the LC 5QI priority, along with the packet delay budget (PDB) and guaranteed flow bitrate (GFBR), in order to meet the QoS characteristics of the 5QI QoS flow and achieve fairness across different UEs in the cell. As mentioned previously, 5QI-aware downlink scheduler uses the QoS characteristics of each LC that is defined by its associated 5QI priority value to determine a scheduling metric that allows scheduling on a per LC basis. We build in slice awareness on top of this 5QI-aware scheduler in order to meet the slice SLA. This can be achieved by dynamically allocating resources to meet the SLA of each slice by modifying the 5QI scheduling metric to include the slice level priority as detailed below.

The slice priority value can be derived based on slice level requirements or SLA, e.g., per-slice aggregate throughput, target PER, maximum latency, user throughput, etc. Toward this goal, we enhance the LC scheduling metric of the DL scheduler to include a metric that indicates the priority of LCs within a slice as follows:

$$P_{LC} = (W_{5QI}*P_{5QI} + W_{PF}*P_{PF} + nsPriority) * \text{maximum} (W_{GBR}*P_{GBR}, W_{PDB}* P_{PDB})$$

where nsPriority is the priority weight given to slice S-NSSAI, and nsPriority is set to 0 for the default slice and for slices without an RRM Policy.

<u>Slice Priority *nsPriority*:</u> In Option 1, nsPriority>=0 is a vendor-specific and customer-settable configurable parameter that may be derived based on different slice level requirements. In Option 2, the slice SLA dictates whether *nsPriority* is dependent on the LC, PDU session, UE or the slice. For example, if the slice SLA indicates that the aggregate throughput of a slice is to be limited to T Mbps, then the slice priority metric *nsPriority* will be the same for all LCs that belong to a particular slice. In contrast, if the slice SLA specifies that each PDU session admitted in the slice is to be given a specific throughput, which may be different from the throughput requirement of another PDU session in the slice, then *nsPriority* will be specific to a PDU session, i.e., it will be the same for all LCs within a PDU session, but will be different for LCs across different PDU sessions, even if they belong to the same slice.

In the example embodiment according to the present disclosure, the slice SLA is aggregate throughput achieved in the slice across all PDU sessions admitted in the slice. In this case, we define the slice specific priority metric as

$$nsPriority = K_s * R_{rem}/R_{target}$$

where the following conditions apply:

*nsPriority* is constant across all LCs belonging to a given slice;

$R_{target}$ is the amount of data to be transmitted in the slice per averaging window W to meet slice SLA;

$R_{rem}$ is the remaining amount of data within the averaging window W that needs to be transmitted to meet slice SLA;

The range of *nsPriority* is $[0, K_s]$ where $K_s$ is a weight common to all slices; and

W is the averaging window, and can be set to 2000ms (same as that of GBR 5QI flows).

Enforcing RRM Policy Ratio on a per-Slot Basis: In this Section, we outline a method to enforce the RRM Policy on a per slot basis, i.e., during resource allocation phase, the scheduler enforces the following rules collectively for all Logical Channels within PDU sessions that belong to Member List $L_n$, n=1, 2, ... , N:

a) $X_n$ % of available resources $AvailRB_{TOT}$ in a slot are reserved exclusively for and allocated as dedicated resources;

b) $(Y_n - X_n)$% of available resources $AvailRB_{TOT}$ in a slot are allocated on a prioritized basis; and

c) a maximum of $Z_n$% of available resources $AvailRB_{TOT}$ in a slot are allocated in total.

Resource Allocation: When the number of active users in a cell is below a configurable threshold *threshActUsrSchedBase,* then the downlink scheduler shall follow the general procedure outlined for candidate LC selection and resource allocation, the differences being outlined below.

Initialization (in each slot):

a) Total shared resources available for scheduling is

$$AvailRB_{shared} = AvailRB_{TOT} - SUM_n(Y_n) * AvailRB_{TOT}$$

where $AvailRB_{TOT}$ is the total #PRBs available for scheduling DRBs across all slices, and $SUM_n$ is summed over all policy instances n=1, ...., N

b) Allocated prioritized resources in policy instance 'n' is $AllocRB_{prio,n} = 0$, and allocated dedicated resources is $AllocRB_{ded,n} = 0$, for n=1, ....N

c) Total shared resources is $AllocRB_{shared} = 0$.

d) Total allocated resources in policy instance n is $AllocRB_n = 0$, n= 1, ...., N

Round 1 - Allocation of Dedicated and Prioritized resources:

a) Step 1.1: As each logical channel $LC_{n,m}$ belonging to a slice in member list $L_n$ is selected (after passing PDCCH resource reservation checks) for scheduling based on its scheduling metric, the number of resources allocated to the $LC_{n,m}$ for scheduling in the current slot is $AllocRB_{n,m} = min(RB_{drain,n,m}, Y_n * AvailRB_{TOT} - AllocRB_{prio,n} - AllocRB_{ded,n})$, where:

i) $AllocRB_{ded,n}$ is the total number of dedicated PRBs that have already been allocated from policy instance 'n' in current slot;

ii) $AllocRB_{prio,n}$ is the total number of prioritized PRBs that have already been allocated from policy instance 'n' in current slot;

iii) $RB_{drain,n,m}$ is the total number of RBs required to drain $LC_{n,m}$; and

iv) $Y_n$ is the rRMPolicyMinRatio from 3GPP RRM Policy (as previously described above).

b) Step 1.2: Update $AllocRB_{prio,n}$ and/or $AllocRB_{ded,n}$.

c) Step 1.3: Update total allocated resources in policy instance 'n': $AllocRB_n += AllocRB_{n,m}$ (i.e., new value of $AllocRB_n$ is set as old value of $AllocRB_n$ plus $AllocRB_{n,m}$)

d) Step 1.4: If all prioritized & dedicated RBs have been allocated from policy instance 'n' (i.e., $\text{AllocRB}_{\text{prio},n}$ + $\text{AllocRB}_{\text{ded},n} = Y_n * \text{AvailRB}_{\text{TOT}}$), then LCs belonging to a slice in member list $L_n$ shall no longer be selected for scheduling in Round 1 .

e) Step 1.5: If there are no more active LCs remaining in slice member list $L_n$,

    i) then the remaining prioritized resources $((Y_n - X_n)* \text{AvailRB}_{\text{TOT}} - \text{AllocRB}_{\text{prio},n})$ are added to total shared resources $\text{AvailRB}_{\text{shared}} += ((Y_n - X_n)* \text{AvailRB}_{\text{TOT}} - \text{AllocRB}_{\text{prio},n})$; and

    ii) if the configurable parameter *nsReuseDedResEnable* is set to TRUE, then the remaining dedicated resources $(X_n * \text{AvailRB}_{\text{TOT}} - \text{AllocRB}_{\text{ded},n})$ from policy instance 'n' are also added to total shared resources $\text{AvailRB}_{\text{shared}} += (X_n * \text{AvailRB}_{\text{TOT}} - \text{AllocRB}_{\text{ded},n})$.

f) Step 1.6: When no more PDCCH resources are available OR when each of the policy instances n , n=1, ..., N satisfy one or both of the following conditions, then Round 1 of resource allocation is complete and we move on to Round 2:

    i) there are no active LCs in slice member list $L_n$;

    ii) There are no dedicated and prioritized resources available for scheduling in slice member list $L_n$..

Notation used in this document: z += x indicates that new value of z is set to the old value of z plus x. Similarly, z -= x indicates that the new value of z is set to the old value of z minus x. Also, y = y + x indicates that new value of y is equal to old value of y plus x.

Round 2 - Allocation of Shared resources: This step shall be applicable to policy instances 'n', where n=0,1,2,..., N which includes the default policy instance n=0.

a) Step 2.1: Re-select logical channel $LC_{n,m}$ in order of scheduling priority metric that were either i) allocated dedicated an/or prioritized resources from policy instance 'n' in Round 1, or ii) not allocated any resources due to lack of both dedicated and prioritized resources available in policy instance 'n'.

b) Step 2.2: If the following conditions i) and ii) are satisfied, i.e.:

    i) the total number of resources allocated in policy instance 'n' satisfies $\text{AllocRB}_n < Z_n * \text{AvailRB}_{\text{TOT}}$, and

    ii) the total number of resources that were allocated to logical channel $LC_{n,m}$ satisfies $\text{AllocRB}_{n,m} < \text{RB}_{\text{drain},n,m}$,

    then perform the following:

    iii) allocate additional PRBs from shared resources to $LC_{n,m}$ as: $\text{AllocRB}_{\text{shared},n,m} <= \min(\text{RB}_{\text{drain},n,m} - \text{AllocRB}_{n,m}, \text{AvailRB}_{\text{shared}})$ such that the %allocated RBs to all LCs in slice member list $L_n$ does not exceed the limit rRMPolicyMaxRatio $Z_n$, i.e., $\text{AllocRB}_n + \text{AllocRB}_{\text{shared},n,m} <= Z_n * \text{AvailRB}_{\text{TOT}}$;

    iv) Update total available shared resources $\text{AvailRB}_{\text{shared}} -= \text{AllocRB}_{\text{shared},n,m}$; and

    v) Update total allocated resources to LCs in slice member list $L_n$: $\text{AllocRB}_n += \text{AllocRB}_{\text{shared},n,m}$

c) Step 2.3: If there are shared resources remaining, $\text{AvailRB}_{\text{shared}} > 0$, then repeat Steps 2.1 to 2.2 above.

Enforcing RRM Policy Ratio over an Averaging Window: In this Section, we outline a method to enforce the RRM Policy over an averaging window W (W is configurable, default 2000 ms), i.e., during resource allocation phase, the scheduler enforces the following rules collectively for all PDU sessions belonging to Member List $L_n$, n=1, 2, ... , N:

a) $X_n$ % of total resources available in averaging window W is reserved exclusively for and allocated as dedicated resources.

b) $(Y_n - X_n)$% of total resources available in averaging window W is allocated on a prioritized basis.

c) A maximum of $Z_n$% of total resources available in averaging window W is allocated in aggregate.

This approach ensures that we continue to use 5QI-aware PF scheduler (as previously described above) to determine the order in which logical channels are selected for scheduling, as network slicing does not explicitly mandate a change in the priority of logical channels. However, when it comes to resource allocation, the RRM Policy Ratio rules are enforced, but not on a per-slot basis, but instead on an average over a pre-set averaging window W. Some of the advantages of following this approach include:

i) There is less probability of leaving dedicated resources for a member list unutilized due to absence of traffic for one or more slots as the same can be utilized later during the averaging window when new data arrives.

ii) SRB and MAC-CE have a larger pool of shared resources to be used for scheduling as the expectation is that this type of high priority traffic will not be present in majority of the slots.

iii) There is no need to create multiple PDU session lists corresponding to different slices/policy instances.

iv) There is no need to make multiple passes/rounds of scheduling for the same PDU session for each slot.

v) Resource wastage as part of dedicated resources - The MAC layer instantiates multiple scheduler instances, with each scheduler object $SO_n$, n=1, 2, ... , N corresponding to RRM Policy Instance n and corresponding member list $L_n$. In addition, a common scheduler object $SO_0$ allocates shared resources across all slices including those without an SLA. In each slot, each scheduler object $SO_n$, n=1, 2, ... , N allocates resources as given below.

Method to allocate resources: According to an example embodiment of a method, the following steps are implemented to allocate resources for shortlisted logical channels (LCs):

1) At the start of each averaging window W, initialize the following:

a) count of dedicated resources $RB_{n,ded} = (X_n * AvailRB_{TOT} * W * 2^\mu)$ for each policy instance n, n=1, 2, ... , N; Value of $\mu$ could be 0, 1, 2 or higher and depends on sub-carrier spacing used in the 5G system. Window of length W ms consists of $W * 2^\mu$ slots.

b) count of prioritized resources $RB_{n,prio} = 0$ for each policy instance n, n=1, 2, ... , N; and

c) count of shared resources $RB_{share} = [(1 - Y_1 - Y_2 - ... - Y_N) * RB_{TOT} * W * 2^\mu]$ that is available for all slices in policy instances n=1,...,N

2) At the start of each slot t, t=0, 1, ... , $2^\mu *W -1$ within averaging window W, update the following:

$$RB_{n,prio} = RB_{n,prio} + [(Y_n - X_n) * AvailRB_{TOT}]$$

for each policy instance n, n=1, 2, ... , N.

3) For all SRBs and MAC-CE and for all DRBs with default RRM Policy Instance n=0 that are shortlisted in slot "t", t=0, 1, ..., $2^\mu.W -1$:

a) allocate resources $r_{share}$ from shared pool $RB_{share}$; and

b) update $RB_{share} = RB_{share} - r_{share}$.

c) Both $RB_{n,ded} = 0$ & $RB_{n,prio} = 0$ for n=0

4) For all DRBs from member list $L_n$, n=1, 2, ... , N, that are shortlisted in slot "t", t=0, 1, ... , $2^\mu *W -1$:

a) If $RB_{n,ded} > 0$,

i. allocate resources $r_{n,ded}$ from dedicated pool of resources, and

ii. update $RB_{n,ded} = RB_{n,ded} - r_{n,ded}$.

b) Else if $RB_{n,prio} > 0$,

    i. allocate resources $r_{n,prio}$ from prioritized pool of resources, and

    ii. update $RB_{n,prio} = RB_{n,prio} - r_{n,prio}$.

c) Else if $RB_{share} > 0$,

    i. allocate resources $r_{share}$ from shared pool of resources, and

    ii. update $RB_{share} = RB_{share} - r_{share}$.

5) In steps (3) & (4) above, resource is allocated to a logical channel from a given pool of resources until the one or more of the following conditions are satisfied:

    a) the shortlisted logical channel is drained;

    b) there are no more resources available in the pool under consideration; or

    c) there are no more resources available in the current slot to allocate.

6) At the end of slot "t", t=0, 1, ..., $2^{\mu}$ *W -1, for each policy instance "n", n=1, 2, ... , N, perform the following:

    a) set $\delta_n = \min(RB_{n,prio}, \max(0, AvailRB_{TOT} - RB_{share}))$;

    b) update common shared resources: $RB_{share} = RB_{share} + \delta_n$; and

    c) update prioritized resources $RB_{n,prio} = RB_{n,prio} - \delta_n$.

Note that value of $\delta_n$ is equal to (old) value of $RB_{n,prio}$ if (old) value of $RB_{share}$ is equal to zero (i.e., all shared resources were used in the previous slot). Remaining prioritized resources from the previous slot are added as part of shared resources for the next slot. This also happens if (old) value of $RB_{n,prio}$ is less than or equal to $\max(0, AvailRB_{TOT} - RB_{share})$.

<u>Uplink Slice-Aware Scheduling</u>: In the following sections, details of uplink slice-aware scheduling will be discussed.

Uplink Scheduling for Retransmissions: Retransmission Transport Blocks (TBs), etc. are scheduled as per existing rules, where total number of resources available for transmission equals $AvailRB_{TOT}$, the maximum number of RBs available in the slot for PUSCH transmission. Once the number of resources to be allocated to this higher priority retransmission TBs is determined as per existing rules, the total number of RBs available for transmission of DRBs which may belong to different slices, is then updated as follows:

$$AvailRB_{TOT} = AvailRB_{TOT} - AllocRB$$

where AllocRB is the total RBs allocated for transmission of high priority LCGs/retransmissions.

Uplink Scheduling based on RRM Policy Ratio in the DU: Regarding scheduling and resource allocation for SR, i) the scheduling of SR happens with priority higher than BSR, and ii) if QCI 1 bearer (VoNR) is present, then the allocation size is as per GBR.

Slice- and QoS-Aware Scheduling in the Uplink: QoS awareness of remaining DRBs during uplink scheduling shall be achieved by supporting QoS differentiation within each slice and across slices. The UL scheduler shall derive a Logical Channel Group (LCG) scheduling metric based on 5QI priority, guaranteed flow bitrate (GFBR), and proportional fair (PF) metric in order to meet the QoS characteristics of the 5QI QoS flow.

Each LCG can consist of one or more LCs with different QoS classes (i.e., different 5QIs). For each LCG, the LCG priority, $P_{LCG}$, is computed using the LC which has the most stringent QoS requirements in that group of LCs in the LCG.

$$P_{LCG} = P_{LC} + P_{GBR} + P_{PF}$$

This 5QI-aware uplink scheduler uses the QoS characteristics of each LCG that is defined by its associated maximum 5QI priority value among all LCs in the LCG to determine a scheduling metric that allows scheduling on a per LCG basis. The variables $P_{LCG}$ (LCG priority), $P_{LC}$ (logical channel priority) $P_{GBR}$ (guaranteed bitrate priority) and $P_{PF}$ (achievable data rate priority) will be explained in detail below.

Logical channel priority $P_{LC}$: As discussed earlier, for each LCG, LC with the most stringent 5QI is chosen for the $P_{LC}$ calculation below:

$P_{LC}$ is the 5QI related priority of the LCG obtained from the standardized 3GPP 5QI table:

$$P_{LC} = nr5qiCoeff * \frac{MAX\_5QI\_PRIO\_VALUE - qosPrioLevel}{MAX\_5QI\_PRIO\_VALUE}$$

where,

*qosPrioLevel* is the 3GPP 5QI priority of the chosen logical channel (within the LCG);
*MAX_5QI_PRIO_VALUE* is the maximum priority value in the standardized 3GPP 5QI table; and
*nr5qiCoeff* is a configurable parameter that reflects the weight given to the 5QI priority $P_{LC}$ during LCG selection in the uplink.

Guaranteed bitrate priority $P_{GBR}$:

The GBR priority $P_{GBR}$ of a LCG is calculated as follows:

$$P_{GBR} = gbrServedRateCoeff * \frac{remData}{GBR}$$

where,

*gbrServedRateCoeff* is a configurable parameter that determines the weight given to the GBR priority for LCG selection in the uplink;

*remData* is the data that remains to be scheduled over an averaging window for this LCG to meet its target bit rate; and

*GBR* is the target bit rate to be achieved with the LCG.

Normalized achievable data rate priority $P_{PF}$:

Achievable data rate priority $P_{PF}$ is calculated as follows:

$$P_{PF} = uePfsCoeff \times \frac{currVal - ueUlAchvblDataRateMin}{ueUlAchvblDataRateRange}$$

where,

- *uePfsCoeff* is a configurable parameter that reflects the relative weight given to $P_{PF}$ during LCG selection for scheduling.
- *currVal* reflects the achievable (normalized) throughput if UE is scheduled in the current slot:

$$currVal = \frac{1 + ThroughputCoeff \times log10(\frac{TBS_{mcs} \times SlotPerSecond}{8})}{1 + fairnessCoeff \times log10(CurrDataRate\_UL)}$$

   ◦ *ThroughputCoeff* is a configurable parameter. $TBS_{mcs}$ is the transport block size (TBS) with current modulation and coding (denoted as mcs or MCS). CurrDataRate_UL is the current data rate in UL if UE is selected to be served in that slot. It is set to a minimum value if this UE is not selected to be served.

- *ueUlAchvblDataRateMin* is the minimum (normalized) throughput that can be achieved by the UE:

$$ueUlAchvblDataRateMin = \frac{1 + fairnessCoeff \times log10\left(\frac{TBS_{mcs=0} \times SlotPerSecond\_UL}{8}\right)}{1 + fairnessCoeff \times log10\left(\frac{TBS_{mcs=\max\_UL} \times SlotPerSecond\_UL}{8}\right)}$$

○ *fairnessCoeff* is a configurable parameter. $TBS_{mcs=0}$ is the TBS with the lower MCS (i.e., with MCS zero). $TBS_{max\_UL}$ is the TBS for maximum possible UL MCS.

- *ueUlAchvblDataRateRange* is the range of throughput that can be achieved by the UE: *ueUlAchvblDataRateRange = ueUlAchvblDataRateMax - ueUlAchvblDataRateMin*

○ *ueUlAchvblDataRateMax* is the maximum (normalized) throughput that can be achieved by the UE:

$$ueUlAchvblDataRateMax = \frac{1 + fairnessCoeff \times log10\left(\frac{TBS_{mcs=max} \times SlotPerSecond\_UL}{8}\right)}{1 + fairnessCoeff \times log10(MIN_{KBPS})}$$

Here, $TBS_{mcs=max}$ is the TBS with the maximum MCS. $MIN_{KBPS}$ which can be achieved with the lowest MCS (i.e. with MCS set to zero).

LCG priority $P_{LCG}$:

As discussed earlier, the overall LCG priority $P_{LCG}$ is then calculated using the priority metric, $P_{LC}$ of the LC with the most stringent QoS requirements in that LCG , plus the GBR priority (for GBR bearers only) plus the normalized data rate priority as follows:

$$P_{LCG} = P_{LC} + P_{PF} + P_{GBR}$$

We shall build in slice awareness by utilizing this 5QI-aware scheduler as the basic building block and adding slice awareness on top of it in order to meet the slice SLA. This is achieved by dynamically allocating resources to meet the SLA of each slice by modifying the 5QI scheduling metric to include the slice level priority as detailed below. The slice priority value is derived based on slice level requirements or SLA, e.g., per-slice aggregate throughput, target PER, maximum latency, user throughput, etc. Toward this goal, we enhance the LCG scheduling metric of the UL scheduler to include a metric that indicates the priority of LCs within a slice for the UE as follows:

$$P_{LCG} = P_{LC} + nsPriority\_ul + P_{GBR} + P_{PF}$$

where *nsPriority_ul* is the priority weight given to slice S-NSSAI. *nsPriority_ul* is set to 0 for the default slice and for slices without an RRM Policy. Once the slice aware LCG scheduling metric is calculated, the corresponding UE selection and resource allocation shall proceed.

Slice Priority *nsPriority_ul:*

Option 1: *nsPriority-ul>=0* is a vendor-specific & customer settable configurable parameter that is derived based on different slice level requirements.

Option 2: The slice SLA dictates whether *nsPriority_ul* is dependent on the LCG, PDU session, UE or the slice. For example, if the slice SLA indicates that the aggregate throughput of a slice is to be limited to T Mbps, then the slice priority metric *nsPriority_ul* will be the same for all LCGs that belong to a particular slice. In contrast, if the slice SLA specifies that each PDU session admitted in the slice is to be given a specific throughput of T Mbps, which may be different from the throughput requirement of another PDU session in the slice, then *nsPriority* will be specific to a PDU session, i.e. it will be the same for all LCGs within a PDU session, but will be different for LCGs across different PDU sessions, even if they belong to the same slice.

In the present example embodiment, the slice SLA is aggregate throughput achieved in the slice across all PDU sessions admitted in the slice. In this case, we define the slice specific priority metric as follows:

$$nsPriority\_ul = K_s * R_{rem}/R_{target}$$

where,

- *nsPriority ul* is constant across all LCGs belonging to a given slice;

- $R_{target}$ is the amount of data to be transmitted in the slice per averaging window W to meet slice SLA. For example, W can be set to 2000ms.

- $R_{rem}$ is the remaining amount of data within the averaging window W that needs to be transmitted to meet the slice SLA; and

- the range of *nsPriority ul* is [0, $K_s$], where $K_s$ is a weight common to all slices.

Enforcing RRM Policy Ratio in the Uplink on a per-slot basis:

In this Section, an example method to enforce the RRM Policy on a per-slot basis is explained, i.e., during resource allocation phase, the scheduler enforces the following rules collectively for all Logical Channels within PDU sessions that belong to Member List $L_n$, n=1, 2, ... ,N:

a) $X_n$ % of available resources $AvailRB_{TOT}$ in a slot is reserved exclusively for and allocated as dedicated resources; and

b) $(Y_n - X_n)$% of available resources $AvailRB_{TOT}$ in a slot is allocated on a prioritized basis; and

c) a maximum of $Z_n$% of available resources $AvailRB_{TOT}$ in a slot is allocated in total.

Resource Allocation:

When the number of active users in a cell is below a configurable threshold *threshActUsrSchedBase,* then the uplink scheduler shall follow the general procedure for candidate LC (or LCG) selection and resource allocation, with the differences being outlined below.

Initialization (in each slot):

- Total shared resources available for scheduling $AvailRB_{shared} = AvailRB_{TOT} - SUM_n(Y_n) * AvailRB_{TOT}$;

  ◦ $AvailRB_{TOT}$ is the total #PRBs available for scheduling DRBs across all slices, and $SUM_n$ is summation of $Y_n$ over all policy instances n=1, ...., N.

- Allocated prioritized resources in policy instance 'n' is $AllocRB_{prio,n} = 0$, and allocated dedicated resources is $AllocRB_{ded,n} = 0$, for all slices $S_n$, n=1, ...., N.

- Total shared resources $AllocRB_{shared} = 0$.

- Total allocated resources in slice policy instance n is $AllocRB_n = 0$, n= 1, ...., N.

Round 1 - Allocation of Dedicated and Prioritized resources:

- Step 1.1: As each logical channel group $LCG_{n,m}$ belonging to a slice in member list $L_n$ is selected (after passing PDCCH resource reservation checks) for scheduling based on its scheduling metric, the number of resources allocated to the $LCG_{n,m}$ for scheduling in the current slot is $AllocRB_{n,m} = min(RB_{drain,n,m}, M1_m, Y_n * AvailRB_{TOT} - AllocRB_{prio,n} - AllocRB_{ded,n})$, where:

    i) $AllocRB_{ded,n}$ is the total number of dedicated PRBs that have already been allocated from policy instance 'n' in current slot;

    ii) $AllocRB_{prio,n}$ is the total number of prioritized PRBs that have already been allocated from policy instance 'n' in current slot;

    iii) $RB_{drain,n,m}$ is the total number of RBs required to drain $LCG_{n,m}$;

    iv) $M1_m$ is the maximum number of RBs that can be allocated to the UE 'm', due to its power constraints; and

    v) $Y_n$ is the rRMPolicyMinRatio from 3GPP RRM Policy (as defined earlier).

- Step 1.2: Update $AllocRB_{prio,n}$ and/or $AllocRB_{ded,n}$.

- Step 1.3: Update total allocated resources in policy instance 'n' : $AllocRB_n += AllocRB_{n,m}$.

- Step 1.4: If all prioritized and dedicated RBs have been allocated from policy instance 'n' (i.e., $AllocRB_{prio,n} + AllocRB_{ded,n} = Y_n * AvailRB_{TOT}$), then LCGs belonging to a slice in member list $L_n$ shall no longer be selected for scheduling in Round 1.

- Step 1.5: If there are no more active LCGs remaining in member list $L_n$,

    i) Then the remaining prioritized resources $((Y_n - X_n)* AvailRB_{TOT} - AllocRB_{prio,n})$ are added to total shared resources $AvailRB_{shared} += ((Y_n - X_n)* AvailRB_{TOT} - AllocRB_{prio,n})$;

    ii) If the configurable parameter *nsReuseDedResEnable* is set to TRUE, then the remaining dedicated resources $(X_n * AvailRB_{TOT} - AllocRB_{ded,n})$ from policy instance 'n' are also added to total shared resources $AvailRB_{shared} += (X_n * AvailRB_{TOT} - AllocRB_{ded,n})$.

- Step 1.6: When no more PDCCH resources are available OR when each of the policy instances n , n=1, ..., N satisfy one or both of the following conditions, then Round 1 of resource allocation is complete and we move on to Round 2:

    i) There are no active LCGs in the slice member list $L_n$;

    ii) There are no dedicated and prioritized resources available for scheduling in the slice member list $L_n$..

Round 2 - Allocation of shared resources: This step shall be applicable to policy instances 'n', where n=0,1,2,..., N which includes the default policy instance n=0.
iii) Step 2.1: Re-select logical channel $LCG_{n,m}$ in the order of scheduling priority metric that were either: allocated dedicated an/or prioritized resources from policy instance 'n' in Round 1, or not allocated any resources due to lack of both dedicated & prioritized resources available in policy instance 'n'.

- Step 2.2: If the following conditions i) and ii) are satisfied,

    i) the total number of resources allocated to policy instance 'n' satisfies $AllocRB_n < Z_n * AvailRB_{TOT}$, and

    ii) the total number of resources that were allocated to logical channel group $LCG_{n,m}$ satisfies $AllocRB_{n,m} < RB_{drain,n,m}$, and $AllocRB_{n,m} < M1_m$, then

        ∘ allocate additional PRBs from shared resources to $LCG_{n,m}$ as: $AllocRB_{shared,n,m} <= min(RB_{drain,n,m} - AllocRB_{n,m}, M1_m - AllocRB_{n,m}, AvailRB_{shared})$ such that the percentage of allocated RBs to all LCGs in slice member list $L_n$ does not exceed the limit rRMPolicyMaxRatio $Z_n$, i.e., $AllocRB_n + AllocRB_{shared,n,m} <= Z_n * AvailRB_{TOT}$;

iii) Update total available shared resources $\text{AvailRB}_{shared}$ -= $\text{AllocRB}_{shared,n,m}$; and

iv) Update total allocated resources to LCGs in slice member list $L_n$ : $\text{AllocRB}_{tot,n}$ += $\text{AllocRB}_{shared,n,m}$.

- Step 2.3: If there are shared resources remaining, $\text{AvailRB}_{shared}$ > 0, then repeat Steps 2.1 to 2.2 above.

Enforcing RRM Policy Ratio over an Averaging Window:

In this Section, a method to enforce the RRM Policy over an averaging window W is explained (W is configurable, default 2000ms), i.e., during resource allocation phase, the scheduler enforces the following rules collectively for all PDU sessions belonging to Member List $L_n$, n=1, 2, ... , N:

a) $X_n$ % of total resources available in averaging window W is reserved exclusively for and allocated as dedicated resources;

b) $(Y_n - X_n)$% of total resources available in averaging window W is allocated on a prioritized basis;

c) a maximum of $Z_n$% of total resources available in averaging window W is allocated in aggregate.

This approach helps to ensure that we continue to use a 5QI-aware PF scheduler to determine the order in which logical channels are selected for scheduling, as network slicing does not explicitly mandate a change in the priority of logical channels. However, when it comes to resource allocation, the RRM Policy Ratio rules are enforced, but not on a per-slot basis, but instead on an average over a pre-set averaging window W. Some of the advantages of following this approach include:

a) There is less probability of leaving dedicated resources for a member list unutilized due to absence of traffic for one or more slots, as the same can be utilized later during the averaging window when new data arrives.

b) SRB and MAC-CE have a larger pool of shared resources to be used for scheduling, as the expectation is that this type of high priority traffic will not be present in majority of the slots.

c) There is no need to create multiple PDU session lists corresponding to different slices/policy instances.

d) There is no need to make multiple passes/rounds of scheduling for the same PDU session for each slot.

e) The MAC layer instantiates multiple scheduler instances, with each scheduler object $SO_n$, n=1, 2, ... , N corresponding to RRM Policy Instance n and corresponding member list $L_n$. In addition, a common scheduler object $SO_0$ allocates shared resources across all slices including those without an SLA. In each slot, each scheduler object $SO_n$, n=1, 2, ... , N allocates resources in the order described in the following section.

Method to allocate resources:

In this section, an example method to allocate resources for shortlisted logical channel groups is explained in detail:

1. At the start of each averaging window W, initialize the following:

a. count of dedicated resources $RB_{n,ded} = (X_n * RB_{TOT} * W * 2^\mu)$ for each policy instance n, n=1, 2, ..., N. As before, $\mu$ could take values such as 0, 1, 2, .... and it depends on sub-carrier spacing used in the 5G NR system.

b. count of prioritized resources $RB_{n,prio}$ = 0 for each policy instance n, n=1,2,... ,N.

c. count of shared resources $RB_{share} = [(1 - Y_1 - Y_2 - ... - Y_N) * RB_{TOT} * W * 2^\mu]$ that is available for all slices in policy instances n=1,... ,N.

2. At the start of each slot t, t=0, 1, ..., $2^\mu *W -1$ within averaging window W, update
$RB_{n,prio} = RB_{n,prio} + [(Y_n - X_n) * RB_{TOT}]$ for each policy instance n, n=1, 2, ..., N.

3. For all SRB and MAC-CE from default slice and for all LCGs with RRM Policy Instance 0 that are shortlisted in slot "t", t=0, 1, ... , $2^\mu$ *W -1:

   a. allocate resources $r_{share}$ from shared pool $RB_{share}$; and
   b. update $RB_{share} = RB_{share} - r_{shar}$.
   c. Both RBn,ded = 0 and RBn,prio = 0 for n=0.

4. For all LCGs from member list $L_n$, n=1, 2, ... , N, that are shortlisted in slot "t", t=0, 1, ..., $2^\mu$ *W -1:

   a. If $RB_{n,ded} > 0$ ,

      i. allocate resources $r_{n,ded}$ from dedicated pool of resources; and
      ii. update $RB_{n,ded} = RB_{n,ded} - r_{n,ded}$.

   b. Else, if $RB_{n,prio} > 0$ ,

      i. allocate resources $r_{n,prio}$ from prioritized pool of resources; and
      ii. update $RB_{n,prio} = RB_{n,prio} - r_{n,prio}$

   c. Else, if $RB_{share} > 0$ ,

      i. allocate resources $r_{share}$ from shared pool of resources, and
      ii. update $RB_{share} = RB_{share} - r_{share}$.

5. In steps (3) & (4) above, resource is allocated to a logical channel group from a given pool of resources until one or more of the following conditions are satisfied:

   a. the shortlisted logical channel group is drained;
   b. there are no more resources available in the pool under consideration; and/or
   c. there are no more resources available in the current slot to allocate.

6. At the end of slot "t", t=0, 1, ..., $2^\mu$.W -1, for each policy instance "n", n=1, 2, ... , N:

   a. set $\delta_n = \min(RB_{n,prio} , \max(0, RB_{TOT} - RB_{share}))$; and
   b. update common shared resources, $RB_{share,updated} = RB_{share,previous} + \delta_n$, and update prioritized resources, $RB_{n,prio,updated} = RB_{n,prio,previous} - \delta_n$.

Although the example methods have been described in the context of 5G cellular networks, example methods are equally applicable for 4G and other similar wireless networks that support slicing types of techniques.

For the sake of completeness, a list of abbreviations used in the present specification is provided below:

5GC: 5G Core Network
5G NR: 5G New Radio
5QI: 5G QoS Identifier
ACK: Acknowledgement
AM: Acknowledged Mode
APN: Access Point Name
ARP: Allocation and Retention Priority
BS: Base Station
CP: Control Plane
CU: Centralized Unit
CU-CP: Centralized Unit - Control Plane
CU-UP: Centralized Unit - User Plane
DL: Downlink
DDDS: DL Data Delivery Status
DNN: Data Network Name
DRB: Data Radio Bearer
DU: Distributed Unit

eNB: evolved NodeB
EPC: Evolved Packet Core
GBR: Guaranteed Bit Rate
gNB: gNodeB
GTP-U: GPRS Tunneling Protocol - User Plane
IP: Internet Protocol
L1: Layer 1
L2: Layer 2
L3: Layer 3
L4S: Low Latency, Low Loss and Scalable Throughput
LC: Logical Channel
MAC: Medium Access Control
MAC-CE: MAC Control Element
NACK: Negative Acknowledgement
NAS: Non-Access Stratum
NR-U: New Radio - User Plane
NSI: Network Slice Instance
NSSI: Network Slice Subnet Instance
O-RAN: Open Radio Access Network
PDB: Packet Delay Budget
PDCP : Packet Data Convergence Protocol
PDU: Protocol Data Unit
PHY: Physical Layer
QCI: QoS Class Identifier
QFI: QoS Flow Identifier
QoS : Quality of Service
RAT: Radio Access Technology
RB: Resource Block
RDI: Reflective QoS Flow to DRB Indication
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol
RTCP: Real-Time Transport Control Protocol
RU: Radio Unit
SCTP: Stream Control Transmission Protocol
SD: Slice Differentiator
SDAP: Service Data Adaptation Protocol
SLA: Service Level Agreement
S-NSSAI: Single Network Slice Selection Assistance
SRB: Signaling Radio Bearer
SST: Slice / Service Type
TB: Transport Block
TCP: Transmission Control Protocol
TEID: Tunnel Endpoint Identifier
UE: User Equipment
UP: User Plane
UL: Uplink
UM: Unacknowledged Mode
UPF: User Plane Function

**Claims**

1.  A method for optimizing radio resource allocation for 5G-slicing environment in a wireless network, the method comprising:

allocating, by at least one of a downlink, DL, scheduler and an uplink, UL, scheduler, radio resources to each protocol data unit, PDU, session according to a radio resource management, RRM, policy comprising the following rules for each RRM policy ratio instance n, n = 1, 2, ... , N:

    i) providing a dedicated resource allocation in which an aggregate of specified $X_n$ % of total available radio resources $AvailRB_{TOT}$ is allocated to all PDU sessions belonging to slices in a member list $L_n$;

    ii) providing a prioritized resource allocation in which an aggregate of specified $(Y_n - X_n)$% of the total available radio resources $AvailRB_{TOT}$ is allocated to PDU sessions belonging to slices in the member list $L_n$;

    iii) providing a shared resource allocation in which any remaining radio resources are shared by all PDU sessions, including PDU sessions from slices that have already been allocated radio resources, whereby aggregate radio resources allocated to PDU sessions in the member list $L_n$ do not exceed specified $Z_n$ % of the total available radio resources $AvailRB_{TOT}$ for each n = 0, 1, 2 ... , N; and

    iv) providing, for signaling radio bearers, SRBs, and Medium Access Control elements, MAC-CEs, a separate SRB policy instance with a member list $L_n$ having a single entry, SRB slice, wherein the SRB slice contains all SRB and MAC-CE traffic in a given cell of the wireless network.

2. The method according to claim 1, wherein:

the rules for allocating radio resources for RRM policy ratio instances are applied to the total available radio resources $AvailRB_{TOT}$ after allocating radio resources to the SRBs and MAC-CEs.

3. The method according to claim 2, wherein:

retransmission transport blocks, TBs, are scheduled with radio resources after allocating radio resources to the SRBs and MAC-CEs.

4. The method of claim 1, further comprising:

deriving, by the DL scheduler, a slice priority value for a given slice based on slice-level performance requirement including at least one of per-slice aggregate throughput, target packet error rate, maximum latency, and user throughput.

5. The method of claim 1, further comprising:

deriving, by the DL scheduler, a scheduling metric of a logical channel, LC, based at least in part on a priority weight *nsPriority* assigned to the LC within a slice.

6. The method of claim 5, wherein *nsPriority* is defined as:

$$nsPriority = K_s * R_{rem}/R_{target}$$

and wherein the following conditions apply:

    *nsPriority* is constant across all logical channels, LCs, belonging to a given slice;

    $R_{target}$ is the amount of data to be transmitted in the slice per averaging window W to meet slice service level agreement, SLA;

    $R_{rem}$ is the remaining amount of data within the averaging window W that needs to be transmitted to meet slice SLA; and

    the range of *nsPriority* is [0, $K_s$], where $K_s$ is a weight common to all slices.

7. The method of claim 1, wherein the RRM policy is applied on a per-slot basis by applying the following rules collectively for all logical channels, LCs, within PDU sessions that belong to member list $L_n$, n=1, 2, ... , N:

    a) $X_n$ % of total available resources $AvailRB_{TOT}$ in a slot is reserved exclusively for, and allocated as, dedicated resources;

    b) $(Y_n - X_n)$% of total available resources $AvailRB_{TOT}$ in a slot is allocated on a prioritized basis; and

    c) a maximum of $Z_n$% of total available resources $AvailRB_{TOT}$ in a slot is allocated in total.

8. The method of claim 1, wherein the RRM policy is applied over an averaging time window W by applying the following rules collectively for all PDU sessions belonging to member list $L_n$, n=1, 2, ... , N:

a) $X_n$ % of total available resources $AvailRB_{TOT}$ in the averaging time window W is reserved exclusively for, and allocated as, dedicated resources;

b) $(Y_n - X_n)$% of total available resources $AvailRB_{TOT}$ in the averaging time window W is allocated on a prioritized basis; and

c) a maximum of $Z_n$% of total available resources $AvailRB_{TOT}$ in the averaging time window W is allocated in aggregate.

9. A system for optimizing radio resource allocation for 5G-slicing environment in a wireless network, the system comprising:

a scheduler for at least one of downlink, DL, and uplink, UL, scheduling of radio resources to each protocol data unit, PDU, session according to a radio resource management, RRM, policy comprising the following rules for each RRM policy ratio instance n, n = 1, 2, ... , N:

i) providing a dedicated resource allocation in which an aggregate of specified $X_n$ % of total available radio resources $AvailRB_{TOT}$ is allocated to all PDU sessions belonging to slices in a member list $L_n$;

ii) providing a prioritized resource allocation in which an aggregate of specified $(Y_n - X_n)$% of the total available radio resources $AvailRB_{TOT}$ is allocated to PDU sessions belonging to slices in the member list $L_n$; and

iii) providing a shared resource allocation in which any remaining radio resources are shared by all PDU sessions, including PDU sessions from slices that have already been allocated radio resources, whereby aggregate radio resources allocated to PDU sessions in the member list $L_n$ do not exceed specified $Z_n$% of the total available radio resources $AvailRB_{TOT}$ for each n = 0, 1, 2 ... , N; and

iv) providing, for signaling radio bearers, SRBs, and Medium Access Control elements, MAC-CEs, a separate SRB policy instance with a member list $L_n$ having a single entry, SRB slice, wherein the SRB slice contains all SRB and MAC-CE traffic in a given cell of the wireless network.

10. The system according to claim 9, wherein:
the rules for allocating radio resources for RRM policy ratio instances are applied to the total available radio resources $AvailRB_{TOT}$ after allocating radio resources to the SRBs and MAC-CEs.

11. The system according to claim 10, wherein:
retransmission transport blocks, TBs, are scheduled with radio resources after allocating radio resources to the SRBs and MAC-CEs.

12. The system according to claim 9, wherein the scheduler is further configured to:
derive a slice priority value for a given slice based on slice-level performance requirement including at least one of per-slice aggregate throughput, target packet error rate, maximum latency, and user throughput.

13. The system according to claim 9, wherein the scheduler is further configured to:
derive a scheduling metric of a logical channel, LC, based at least in part on a priority weight *nsPriority* assigned to the LC within a slice.

14. The system according to claim 13, wherein *nsPriority* is defined as:

$$nsPriority = K_s * R_{rem}/R_{target}$$

and wherein the following conditions apply:

*nsPriority* is constant across all logical channels, LCs, belonging to a given slice;

$R_{target}$ is the amount of data to be transmitted in the slice per averaging window W to meet slice service level agreement, SLA;

$R_{rem}$ is the remaining amount of data within the averaging window W that needs to be transmitted to meet slice SLA; and

the range of *nsPriority* is [0, $K_s$], where $K_s$ is a weight common to all slices.

15. The system according to claim 9, wherein the RRM policy is applied on a per-slot basis by applying the following rules collectively for all logical channels, LCs, within PDU sessions that belong to member list $L_n$, n=1, 2, ... , N:

a) $X_n$ % of total available resources *AvailRB$_{TOT}$* in a slot is reserved exclusively for, and allocated as, dedicated resources;

b) $(Y_n - X_n)$% of total available resources *AvailRB$_{TOT}$* in a slot is allocated on a prioritized basis; and

c) a maximum of $Z_n$% of total available resources *AvailRB$_{TOT}$* in a slot is allocated in total.

16. The system according to claim 9, wherein the RRM policy is applied over an averaging time window W by applying the following rules collectively for all PDU sessions belonging to member list $L_n$, n=1, 2, ... , N:

a) $X_n$ % of total available resources *AvailRB$_{TOT}$* in the averaging time window W is reserved exclusively for, and allocated as, dedicated resources;

b) $(Y_n - X_n)$% of total available resources *AvailRB$_{TOT}$* in the averaging time window W is allocated on a prioritized basis; and

c) a maximum of $Z_n$% of total available resources *AvailRB$_{TOT}$* in the averaging time window W is allocated in aggregate.

## Patentansprüche

1. Verfahren zur Optimierung der Funkressourcenzuweisung für eine 5G-Slicing-Umgebung in einem drahtlosen Netzwerk, wobei das Verfahren umfasst:

   Zuweisen, mittels mindestens eines aus einem Downlink-, DL, Scheduler und einem Uplink-, UL, Scheduler, von Funkressourcen zu jeder Sitzung einer Protokolldateneinheit, PDU, gemäß einer Funkressourcenverwaltungs-, RRM, Richtlinie, welche die folgenden Regeln für jede RRM-Richtlinienverhältnisinstanz n, n = 1, 2, ... , N, umfasst:

   i) Bereitstellen einer dedizierten Ressourcenzuweisung, bei der ein Aggregat von bestimmten $X_n$ % der gesamten verfügbaren Funkressourcen *AvailRB$_{TOT}$* allen PDU-Sitzungen, die zu Slices in einer Mitgliederliste $L_n$ gehören, zugewiesen wird;

   ii) Bereitstellen einer priorisierten Ressourcenzuweisung, bei der ein Aggregat von bestimmten $(Y_n - X_n)$% der gesamten verfügbaren Funkressourcen *AvailRB$_{TOT}$* PDU-Sitzungen, die zu Slices in der Mitgliederliste $L_n$ gehören, zugewiesen wird;

   iii) Bereitstellen einer gemeinsam genutzten Ressourcenzuweisung, bei der alle verbleibenden Funkressourcen von allen PDU-Sitzungen gemeinsam genutzt werden, einschließlich PDU-Sitzungen aus Slices, denen bereits Funkressourcen zugewiesen wurden, wobei die den PDU-Sitzungen in der Mitgliederliste $L_n$ zugewiesenen aggregierte Funkressourcen für jedes n = 0, 1, 2 ... , N bestimmte $Z_n$ % der gesamten verfügbaren Funkressourcen *AvailRB$_{TOT}$* nicht überschreiten; und

   iv) Bereitstellen, für Signalisierungsfunkträger, SRBs, und Medium-Access-Control-Elemente, MAC-CEs, einer separaten SRB-Richtlinieninstanz mit einer Mitgliederliste $L_n$ mit einem einzigen Eintrag, SRB-Slice, wobei der SRB-Slice den gesamten SRB- und MAC-CE-Traffic in einer bestimmten Zelle des drahtlosen Netzwerks enthält.

2. Verfahren nach Anspruch 1, wobei
   die Regeln für die Zuweisung von Funkressourcen für RRM-Richtlinienverhältnisinstanz auf die gesamten verfügbaren Funkressourcen *AvailRB$_{TOT}$* angewendet werden, nachdem den SRBs und MAC-CEs Funkressourcen zugewiesen wurden.

3. Verfahren nach Anspruch 2, wobei
   Neuübertragungstransportblöcke, TBs, werden mit Funkressourcen geplant, nach der Zuweisung von Funkressourcen an die SRBs und MAC-CEs.

4. Verfahren nach Anspruch 1, das ferner umfasst:
   Ableiten, durch den DL-Scheduler, eines Slice-Prioritätswertes für ein gegebenes Slice auf der Grundlage von Leistungsanforderungen auf Slice-Ebene, einschließlich mindestens einem aus: aggregierter Durchsatz pro Slice, Ziel-Paketfehlerrate, maximale Latenz und Benutzerdurchsatz.

5. Verfahren nach Anspruch 1, das ferner umfasst:
   Ableiten, durch den DL-Scheduler, einer Planungsmetrik eines logischen Kanals, LC, zumindest teilweise auf der Grundlage einer Prioritätsgewichtung *nsPriority,* die dem LC innerhalb eines Slice zugewiesen ist.

6. Verfahren nach Anspruch 5, wobei *nsPriority* definiert ist als:

$$nsPriority = K_s * R_{rem}/R_{target}$$

und wobei die folgenden Bedingungen gelten:

nsPriority ist für alle logischen Kanäle, LCs, die zu einem gegebenen Slice gehören, konstant;
$R_{target}$ ist die Datenmenge, die im Slice pro Mittelungsfenster W übertragen werden muss, um das Slice Service Level Agreement, SLA, zu erfüllen;
$R_{rem}$ ist die verbleibende Datenmenge innerhalb des Mittelungsfensters W, die übertragen werden muss, um das Slice-SLA zu erfüllen; und
der Bereich von nsPriority $[0, K_s]$ ist, wobei $K_s$ eine für alle Slices gemeinsame Gewichtung ist.

7. Verfahren nach Anspruch 1, wobei die RRM-Richtlinie auf einer Pro-Slot-Basis angewendet wird, indem die folgenden Regeln kollektiv für alle logischen Kanäle, LCs, innerhalb von PDU-Sitzungen angewendet werden, die zur Mitgliederliste $L_n$, n=1, 2, ... , N gehören:

a) $X_n$ % der gesamten verfügbaren Ressourcen $AvailRB_{TOT}$ in einem Slot sind ausschließlich für dedizierte Ressourcen reserviert und werden als solche zugewiesen;
b) $(Y_n - X_n)$% der gesamten verfügbaren Ressourcen $AvailRB_{TOT}$ in einem Slot werden nach Prioritäten zugewiesen; und
c) maximal $Z_n$% der gesamten verfügbaren Ressourcen $AvailRB_{TOT}$ in einem Slot werden insgesamt zugewiesen.

8. Verfahren nach Anspruch 1, wobei die RRM-Richtlinie über ein Mittelungszeitfenster W angewendet wird, indem die folgenden Regeln kollektiv für alle PDU-Sitzungen angewendet werden, die zur Mitgliederliste $L_n$, n=1, 2, ... , N gehören:

a) $X_n$ % der gesamten verfügbaren Ressourcen $AvailRB_{TOT}$ in dem Mittelungszeitfenster W sind ausschließlich für dedizierte Ressourcen reserviert und werden als solche zugewiesen;
b) $(Y_n - X_n)$% der gesamten verfügbaren Ressourcen $AvailRB_{TOT}$ in dem Mittelungszeitfenster W werden nach Prioritäten zugewiesen; und
c) maximal $Z_n$% der gesamten verfügbaren Ressourcen $AvailRB_{TOT}$ im Mittelungszeitfenster W werden aggregiert zugewiesen.

9. System zur Optimierung der Funkressourcenzuweisung für eine 5G-Slicing-Umgebung in einem drahtlosen Netzwerk, wobei das System aufweist:
einen Scheduler für mindestens eines aus einem Downlink-, DL, und einem Uplink-, UL, Scheduling von Funkressourcen zu jeder Sitzung einer Protokolldateneinheit, PDU, gemäß einer Funkressourcenverwaltungs-, RRM, Richtlinie, welche die folgenden Regeln für jede RRM-Richtlinienverhältnisinstanz n, n = 1, 2, ... , N, umfasst:

i) Bereitstellen einer dedizierten Ressourcenzuweisung, bei der ein Aggregat von bestimmten $X_n$ % der gesamten verfügbaren Funkressourcen $AvailRB_{TOT}$ allen PDU-Sitzungen, die zu Slices in einer Mitgliederliste $L_n$ gehören, zugewiesen wird;
ii) Bereitstellen einer priorisierten Ressourcenzuweisung, bei der ein Aggregat von bestimmten $(Y_n - X_n)$% der gesamten verfügbaren Funkressourcen $AvailRB_{TOT}$ PDU-Sitzungen, die zu Slices in der Mitgliederliste $L_n$ gehören, zugewiesen wird; und
iii) Bereitstellen einer gemeinsam genutzten Ressourcenzuweisung, bei der alle verbleibenden Funkressourcen von allen PDU-Sitzungen gemeinsam genutzt werden, einschließlich PDU-Sitzungen aus Slices, denen bereits Funkressourcen zugewiesen wurden, wobei die den PDU-Sitzungen in der Mitgliederliste $L_n$ zugewiesenen aggregierte Funkressourcen für jedes n = 0, 1, 2 ... , N bestimmte $Z_n$ % der gesamten verfügbaren Funkressourcen $AvailRB_{TOT}$ nicht überschreiten; und
iv) Bereitstellen, für Signalisierungsfunkträger, SRBs, und Medium-Access-Control-Elemente, MAC-CEs, einer separaten SRB-Richtlinieninstanz mit einer Mitgliederliste $L_n$ mit einem einzigen Eintrag, SRB-Slice, wobei der SRB-Slice den gesamten SRB- und MAC-CE-Traffic in einer bestimmten Zelle des drahtlosen Netzwerks enthält.

10. System nach Anspruch 9, wobei:
die Regeln für die Zuweisung von Funkressourcen für RRM-Richtlinienverhältnisinstanz auf die gesamten verfügbaren Funkressourcen $AvailRB_{TOT}$ angewendet werden, nachdem den SRBs und MAC-CEs Funkressourcen zugewiesen wurden.

**11.** System nach Anspruch 10, wobei:
Neuübertragungstransportblöcke, TBs, werden mit Funkressourcen geplant, nach der Zuweisung von Funkressourcen an die SRBs und MAC-CEs.

**12.** System nach Anspruch 9, wobei der Scheduler ferner für Folgendes ausgebildet ist:
Ableiten eines Slice-Prioritätswertes für ein gegebenes Slice auf der Grundlage von Leistungsanforderungen auf Slice-Ebene, einschließlich mindestens einem aus: aggregierter Durchsatz pro Slice, Ziel-Paketfehlerrate, maximale Latenz und Benutzerdurchsatz.

**13.** System nach Anspruch 9, wobei der Scheduler ferner für Folgendes ausgebildet ist:
Ableiten einer Planungsmetrik eines logischen Kanals, LC, zumindest teilweise auf der Grundlage einer Prioritätsgewichtung *nsPriority,* die dem LC innerhalb eines Slice zugewiesen ist.

**14.** Das System nach Anspruch 13, wobei *nsPriority* definiert ist als:

$$nsPriority = K_s * R_{rem}/R_{target}$$

und wobei die folgenden Bedingungen gelten:

*nsPriority* ist für alle logischen Kanäle, LCs, die zu einem gegebenen Slice gehören, konstant;
$R_{target}$ ist die Datenmenge, die im Slice pro Mittelungsfenster W übertragen werden muss, um das Slice Service Level Agreement, SLA, zu erfüllen;
$R_{rem}$ ist die verbleibende Datenmenge innerhalb des Mittelungsfensters W, die übertragen werden muss, um das Slice-SLA zu erfüllen; und
der Bereich von *nsPriority* $[0, K_s]$ ist, wobei $K_s$ eine für alle Slices gemeinsame Gewichtung ist.

**15.** System nach Anspruch 9, wobei die RRM-Richtlinie auf einer Pro-Slot-Basis angewendet wird, indem die folgenden Regeln kollektiv für alle logischen Kanäle, LCs, innerhalb von PDU-Sitzungen angewendet werden, die zur Mitgliederliste $L_n$, n=1, 2, ... , N gehören:

a) $X_n$ % der gesamten verfügbaren Ressourcen *AvailRB$_{TOT}$* in einem Slot sind ausschließlich für dedizierte Ressourcen reserviert und werden als solche zugewiesen;
b) $(Y_n - X_n)$% der gesamten verfügbaren Ressourcen *AvailRB$_{TOT}$* in einem Slot werden nach Prioritäten zugewiesen; und
c) maximal $Z_n$% der gesamten verfügbaren Ressourcen *AvailRB$_{TOT}$* in einem Slot werden insgesamt zugewiesen.

**16.** System nach Anspruch 9, wobei die RRM-Richtlinie über ein Mittelungszeitfenster W angewendet wird, indem die folgenden Regeln kollektiv für alle PDU-Sitzungen angewendet werden, die zur Mitgliederliste $L_n$, n=1, 2, ... , N gehören:

a) $X_n$ % der gesamten verfügbaren Ressourcen *AvailRB$_{TOT}$* in dem Mittelungszeitfenster W sind ausschließlich für dedizierte Ressourcen reserviert und werden als solche zugewiesen;
b) $(Y_n - X_n)$% der gesamten verfügbaren Ressourcen *AvailRB$_{TOT}$* in dem Mittelungszeitfenster W werden nach Prioritäten zugewiesen; und
c) maximal $Z_n$% der gesamten verfügbaren Ressourcen *AvailRB$_{TOT}$* im Mittelungszeitfenster W werden aggregiert zugewiesen.

**Revendications**

**1.** Procédé d'optimisation d'attribution de ressources radio pour un environnement de découpage en tranches 5G dans un réseau sans fil, le procédé comprenant les étapes consistant à :
attribuer, par au moins l'un d'un planificateur de liaison de descendante, dite, DL et d'un planificateur de liaison montante, dite UL, des ressources radio à chaque session d'unité de protocole de données, dite PDU, conformément à une politique de gestion de ressources radio, dite RRM, comprenant les règles suivantes pour chaque instance de ratio de politique de RRM n, n = 1, 2, ..., N :

i) utiliser une attribution de ressources dédiées dans laquelle un total de $X_n$ % spécifié de ressources radio disponibles totales $AvailRB_{TOT}$ est attribué à toutes les sessions de PDU appartenant à des tranches dans une liste d'éléments $L_n$ ;

ii) utiliser une attribution de ressources prioritaire dans laquelle un total de ($Y_n$ - $X_n$) % spécifié des ressources radio disponibles totales $AvailRB_{TOT}$ est attribué à des sessions de PDU appartenant à des tranches dans la liste d'éléments $L_n$ ;

iii) utiliser une attribution de ressources partagées dans laquelle toutes les ressources radio restantes sont partagées par toutes les sessions de PDU, y compris des sessions de PDU de tranches qui ont déjà fait l'objet d'une attribution de ressources radio, ce par quoi des ressources radio agrégées attribuées aux sessions de PDU dans la liste d'éléments ne dépassent pas $Z_n$ % spécifié de ressources radio disponibles totales $AvailRB_{TOT}$ pour chaque n = 0, 1, 2, ..., N ; et

iv) utiliser, pour des porteuses radio de signalisation, dites SRB, et pour des éléments de commande d'accès au support, dits MAC-CE, une instance de politique de SRB distincte avec une liste d'éléments comportant une tranche de SRB d'entrée unique, dans lequel la tranche de SRB contient tout le trafic de SRB et de MAC-CE dans une cellule donnée du réseau sans fil.

**2.** Procédé selon la revendication 1, dans lequel :
les règles d'attribution de ressources radio pour des instances de ratio de politique de RRM sont appliquées aux ressources radio disponibles totales $AvailRB_{TOT}$ après l'attribution de ressources radio aux SRB et aux MAC-CE.

**3.** Procédé selon la revendication 2, dans lequel :
des blocs de transport, dits TB, de retransmission sont planifiés avec des ressources radio après l'attribution de ressources radio aux SRB et aux MAC-CE.

**4.** Procédé selon la revendication 1, comprenant en outre l'étape consistant à :
dériver, par le planificateur de DL, une valeur de priorité de tranche pour une tranche donnée sur la base d'une exigence de performance de niveau tranche comprenant au moins l'un d'un débit total par tranche, d'un taux d'erreurs de paquets cible, d'une latence maximale et d'un débit d'utilisateur.

**5.** Procédé selon la revendication 1, comprenant en outre l'étape consistant à :
dériver, par le planificateur de DL, un paramètre de planification d'un canal logique, dit LC, sur la base au moins en partie d'un poids de priorité *nsPriority* assigné au LC dans une tranche.

**6.** Procédé selon la revendication 5, dans lequel *nsPriority* est défini tel que :

$$nsPriority = K_s * R_{rem}/R_{target}$$

et dans lequel les conditions suivantes s'appliquent :

*nsPriority* est constant sur tous les canaux logiques, dits LC, appartenant à une tranche donnée ;
$R_{target}$ est la quantité de données à transmettre dans la tranche par fenêtre de calcul de moyenne W pour satisfaire une convention de niveau de service de tranche, dite SLA ;
$R_{rem}$ est la quantité restante de données à l'intérieur de la fenêtre de calcul de moyenne W qu'il convient de transmettre pour satisfaire la SLA de tranche ; et
la plage de *nsPriority* est [0, $K_s$], où $K_s$ est un poids commun à toutes les tranches.

**7.** Procédé selon la revendication 1, dans lequel la politique de RRM est appliquée sur une base par créneau par application collective des règles suivantes pour tous les canaux logiques, dit LC, à l'intérieur de sessions de PDU qui appartiennent à une liste d'éléments $L_n$, n = 1, 2, ..., N :

a) $X_n$ % de ressources radio disponibles totales $AvailRB_{TOT}$ dans un créneau est réservé exclusivement pour des ressources dédiées, et attribué en tant que tel ;
b) ($Y_n$ - $X_n$) % de ressources radio disponibles totales $AvailRB_{TOT}$ dans un créneau est attribué sur une base de priorité ; et

c) un maximum de $Z_n$ % de ressources radio disponibles totales $AvailRB_{TOT}$ dans un créneau est attribué au total.

**8.** Procédé selon la revendication 1, dans lequel la politique de RRM est appliquée sur une fenêtre temporelle de calcul de moyenne W par application collective des règles suivantes pour toutes les sessions de PDU appartenant à la liste d'éléments $L_n$, n = 1, 2, ..., N :

a) $X_n$ % de ressources radio disponibles totales $AvailRB_{TOT}$ dans la fenêtre temporelle de calcul de moyenne W est réservé exclusivement pour des ressources dédiées, et attribué en tant que tel ;
b) ($Y_n$ - $X_n$) % de ressources radio disponibles totales $AvailRB_{TOT}$ dans la fenêtre temporelle de calcul de moyenne W est attribué sur une base de priorité ; et
c) un maximum de $Z_n$ % de ressources radio disponibles totales $AvailRB_{TOT}$ dans la fenêtre temporelle de calcul de moyenne W est attribué au total.

**9.** Système d'optimisation d'attribution de ressources radio pour un environnement de découpage en tranches 5G dans un réseau sans fil, le système comprenant :
un planificateur d'au moins l'une d'une planification de liaison descendante, dite DL, et de liaison montante, dite UL, de ressources radio à chaque session d'unité de protocole de données, dite PDU, conformément à une politique de gestion de ressources radio, dite RRM, comprenant les règles suivantes pour chaque instance de ratio de politique de RRM n, n = 1, 2, ..., N :

i) utiliser une attribution de ressources dédiées dans laquelle un total de $X_n$ % spécifié de ressources radio disponibles totales $AvailRB_{TOT}$ est attribué à toutes les sessions de PDU appartenant à des tranches dans une liste d'éléments $L_n$ ;
ii) utiliser une attribution de ressources prioritaires dans laquelle un total de ($Y_n$ - $X_n$) % spécifié de ressources radio disponibles totales $AvailRB_{TOT}$ est attribué à des sessions de PDU appartenant à des tranches dans une liste d'éléments $L_n$ ; et
iii) utiliser une attribution de ressources partagées dans laquelle toutes les ressources radio restantes sont partagées par toutes les sessions de PDU, y compris des sessions de PDU de tranches qui ont déjà fait l'objet d'une attribution de ressources radio, ce par quoi des ressources radio agrégées attribuées à des sessions de PDU dans la liste d'éléments $L_n$ ne dépassent pas $Z_n$ % spécifié de ressources radio disponibles totales $AvailRB_{TOT}$ pour chaque n = 0, 1, 2, ..., N ; et
iv) utiliser, pour des porteuses radio de signalisation, dites SRB, et pour des éléments de commande d'accès au support, dits MAC-CE, une instance de politique de SRB distincte avec une liste d'éléments $L_n$ comportant une tranche de SRB d'entrée unique, dans lequel la tranche de SRB contient tout le trafic de SRB et de MAC-CE dans une cellule donnée du réseau sans fil.

**10.** Système selon la revendication 9, dans lequel :
les règles d'attribution de ressources radio pour des instances de ratio de politique de RRM sont appliquées aux ressources radio disponibles totales $AvailRB_{TOT}$ après l'attribution de ressources radio aux SRB et aux MAC-CE.

**11.** Système selon la revendication 10, dans lequel :
des blocs de transport, dits TB, de retransmission sont planifiés avec des ressources radio après l'attribution de ressources radio aux SRB et aux MAC-CE.

**12.** Système selon la revendication 9, dans lequel le planificateur est en outre configuré pour :
dériver une valeur de priorité de tranche pour une tranche donnée sur la base d'une exigence de performance de niveau tranche comprenant au moins l'un d'un débit total par tranche, d'un taux d'erreurs de paquets cible, d'une latence maximale et d'un débit d'utilisateur.

**13.** Système selon la revendication 9, dans lequel le planificateur est en outre configuré pour :
dériver un paramètre de planification d'un canal logique, dit LC, sur la base au moins en partie d'un poids de priorité *nsPriority* assigné au LC dans une tranche.

**14.** Système selon la revendication 13, dans lequel *nsPriority* est défini tel que :

$$nsPriority = K_s * R_{rem}/R_{target}$$

et dans lequel les conditions suivantes s'appliquent :

*nsPriority* est constant sur tous les canaux logiques, dits LC, appartenant à une tranche donnée ;

$R_{target}$ est la quantité de données à transmettre dans la tranche par fenêtre de calcul de moyenne W pour satisfaire une convention de niveau de service de tranche, dite SLA ;

$R_{rem}$ est la quantité restante de données à l'intérieur de la fenêtre de calcul de moyenne W qu'il convient de transmettre pour satisfaire la SLA de tranche ; et

la plage de *nsPriority* est [0, $K_s$], où $K_s$ est un poids commun à toutes les tranches.

**15.** Système selon la revendication 9, dans lequel la politique de RRM est appliquée sur une base par créneau par application collective des règles suivantes pour tous les canaux logiques, dit LC, à l'intérieur de sessions de PDU qui appartiennent à une liste d'éléments $L_n$, n = 1, 2, ..., N :

a) $X_n$ % de ressources radio disponibles totales $AvailRB_{TOT}$ dans un créneau est réservé exclusivement pour des ressources dédiées, et attribué en tant que tel ;

b) $(Y_n - X_n)$ % de ressources radio disponibles totales $AvailRB_{TOT}$ dans un créneau est attribué sur une base de priorité ; et

c) un maximum de $Z_n$ % de ressources radio disponibles totales $AvailRB_{TOT}$ dans un créneau est attribué au total.

**16.** Système selon la revendication 9, dans lequel la politique de RRM est appliquée sur une fenêtre temporelle de calcul de moyenne W par application collective des règles suivantes pour toutes les sessions de PDU appartenant à la liste d'éléments $L_n$, n = 1, 2, ..., N :

a) $X_n$ % de ressources radio disponibles totales $AvailRB_{TOT}$ dans la fenêtre temporelle de calcul de moyenne W est réservé exclusivement pour des ressources dédiées, et attribué en tant que tel ;

b) $(Y_n - X_n)$ % de ressources radio disponibles totales $AvailRB_{TOT}$ dans la fenêtre temporelle de calcul de moyenne W est attribué sur une base de priorité ; et

c) un maximum de $Z_n$ % de ressources disponibles totales $AvailRB_{TOT}$ dans la fenêtre temporelle de calcul de moyenne W est attribué au total.

FIGURES

```
┌─────────────────────────────┐        ┌─────────────────────────────┐
│ UE 101                      │        │ gNB 102                     │
│  ┌───────────────────────┐  │        │  ┌───────────────────────┐  │
│  │        SDAP           │◄─┼────────┼─►│        SDAP           │  │
│  └───────────────────────┘  │        │  └───────────────────────┘  │
│  ┌───────────────────────┐  │        │  ┌───────────────────────┐  │
│  │        PDCP           │◄─┼────────┼─►│        PDCP           │  │
│  └───────────────────────┘  │        │  └───────────────────────┘  │
│  ┌───────────────────────┐  │        │  ┌───────────────────────┐  │
│  │        RLC            │◄─┼────────┼─►│        RLC            │  │
│  └───────────────────────┘  │        │  └───────────────────────┘  │
│  ┌───────────────────────┐  │        │  ┌───────────────────────┐  │
│  │        MAC            │◄─┼────────┼─►│        MAC            │  │
│  └───────────────────────┘  │        │  └───────────────────────┘  │
│  ┌───────────────────────┐  │        │  ┌───────────────────────┐  │
│  │        PHY            │◄─┼────────┼─►│        PHY            │  │
│  └───────────────────────┘  │        │  └───────────────────────┘  │
└─────────────────────────────┘        └─────────────────────────────┘
```

FIG. 1

FIG. 2

FIG. 3

FIG. 4

FIG. 5

FIG. 6

FIG. 7

FIG. 8

FIG. 9

**Application /Service Layer**

Data packets from applications

**QoS rules**
(mapping UL packets to QoS flows
and apply QoS flow marking)

**QoS Flow**
(all packets marked with
the same QFI)

Mapping QoS
flows
to AN
Resources

AN Resources

901
**PDU Session**

**PDRs** 9031
(classify packets for
QoS flow marking
and other actions)

101  UE

902 AN

903  UPF

FIG. 10

FIG. 11

FIG. 12

FIG. 13

FIG. 14

FIG. 15

1601

<<ProxyClass>>
RRMPolicyManagedEntity

Represents the following IOCs:
NRCellCU, NRCellDU,
GNBCUUPFunction, GNBCUCPFunction,
GNBDUFunction

1  <<names>>

*  1602

<<InformationObjectClass>>
RRMPolicy_

NRM Fragment for RRM Policies

<<InformationObjectClass>>
Top

1602  <<InformationObjectClass>>
RRMPolicy_

- resourceType (e.g. PRBs, PDU sessions etc.)
- rRMPolicyMemberList (network slice or group
of slices that use this RRM policy)

1603  <<InformationObjectClass>>
RRMPolicyRatio

- rRMPolicyMaxRatio
- rRMPolicyMinRatio
- rRMPolicyDedicatedRatio

FIG. 16

**100%**

rRMPolicyMaxRatio 1703

Shared resources: Shared among slices with no specific guarantees per slice

Shared resources

rRMPolicyMinRatio 1702

Prioritized resources: Guaranteed for use by specific slices but other slices can use these if available (i.e., when the slices for which these are prioritized are not using these)

Prioritized resources

rRMPolicyDedicatedRatio 1701

Dedicated resources: Dedicated resources for the associated slices

Dedicated resources

0

FIG. 17

| 1801a | 1801b | 1802a | 1802b | 1803 |
|---|---|---|---|---|
| Dedicated RBs for PDU sessions of slice 1. | Prioritized RBs for slice 1: All RBs used by PDU sessions corresponding to slice 1 | Dedicated RBs for slice 2. | Prioritized RBs for slice 2 that are used by PDU sessions for slice 2 | Shared RBs for slice 1 and slice 2 |

Downlink Resource Blocks →
(in a given slot)

FIG. 18

Scheduling Metric = function (5QI, PF Metric, Delay Budget, Bit rate, Slice specific parameters)

1901

Signaling, Data session
without any specific slice
1902

Data session specific to slice
1904

unused
resources

1905b
Prioritized
resources
(eMBB1)

1905a
Dedicated
resources
(eMBB1)

unused
resources

1906b
Prioritized
resources
(eMBB2)

1906a
Dedicated
resources
(eMBB2)

Shared resources
1903

FIG. 19